(19) Europäisches Patentamt
European Patent Office
Office européen des brevets

(11) EP 1 466 752 A1

(12) **EUROPEAN PATENT APPLICATION**
published in accordance with Art. 158(3) EPC

(43) Date of publication:
**13.10.2004 Bulletin 2004/42**

(21) Application number: **02786190.5**

(22) Date of filing: **20.12.2002**

(51) Int Cl.7: **B41M 5/30**

(86) International application number:
**PCT/JP2002/013396**

(87) International publication number:
**WO 2003/053710 (03.07.2003 Gazette 2003/27)**

(84) Designated Contracting States:
**AT BE BG CH CY CZ DE DK EE ES FI FR GB GR IE IT LI LU MC NL PT SE SI SK TR**

(30) Priority: **20.12.2001 JP 2001387596**
**20.12.2001 JP 2001387598**
**20.12.2001 JP 2001388129**
**20.12.2001 JP 2001388130**

(71) Applicant: **Fuji Photo Film Co., Ltd.**
**Kanagawa-ken, 250-0123 (JP)**

(72) Inventors:
- **IWASAKI, Masayuki,**
**FUJI PHOTO FILM CO., LTD.**
**Fujinomiya-shi, Shizuoka 418-8666 (JP)**
- **WATANABE, Tsutomu,**
**FUJI PHOTO FILM CO., LTD.**
**Fujinomiya-shi, Shizuoka 418-8666 (JP)**
- **MITSUO, Hirofumi, FUJI PHOTO FILM CO., LTD.**
**Fujinomiya-shi, Shizuoka 418-8666 (JP)**

(74) Representative: **HOFFMANN - EITLE**
**Patent- und Rechtsanwälte**
**Arabellastrasse 4**
**81925 München (DE)**

(54) **HEAT-SENSITIVE RECORDING MATERIAL**

(57) The heat-sensitive recording material of the present invention has a substrate and a heat-sensitive recording layer provided thereon, the layer including an electron-donating colorless dye and an electron-accepting compound. The electron-accepting compound is a compound represented by $R^1$-Ph-$SO_2R^2$, wherein $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a (substituted) phenyl group. The recording material satisfies one of the following conditions: the density of an image portion that has been irradiated with a fluorescent lamp at 500,000 Lux·h is retained at a rate of not less than 80% relative to that of the image portion before irradiation; the volume mean diameter of the electron-accepting compound is not more than 1.0 μm, and the whiteness degree of a non-image portion is 75% to 90%, and a level of density of an image portion, which has been retained under specific conditions, is not more than 50% lower than that of the image portion before retention; and a level of density of a formed image, which has been left under specific conditions, is not more than 50% lower than that of the formed image before leaving and a sensitizer is a specific compound. The invention also provides a heat-sensitive recording material wherein a level of density of a formed image, which has been left under specific conditions, is not more than 50% lower than that of the formed image before leaving and the image density after a heat source has been brought into contact with the heat-sensitive recording material at 70°C for 5 seconds is not more than 0.15.



Printed by Jouve, 75001 PARIS (FR)

## Description

TECHNICAL FIELD

The present invention relates to a heat-sensitive recording material. Specifically, the invention relates to a heat-sensitive recording material having superior apparatus applicability that does not cause deterioration of apparatus durability such as head abrasion, and the like; having image forming applicability and stability as a recording medium; having printing applicability, stamping applicability, environment applicability, and the like; and having usefulness as a plain paper-like recording medium.

BACKGROUND ART

Historically, dye-type heat-sensitive paper containing a colorless leuco dye and a phenolic acidic substance was developed as a heat-sensitive recording technology by NCR Inc. in the 1960s, and this system has become the mainstream of heat-sensitive recording systems. Thereafter, demand for heat-sensitive paper (hereinafter referred to as "heat-sensitive recording material") has increased rapidly since (1) miniaturization and price reduction of apparatuses became possible due to development of thermal heads based on semiconductor technologies and significant improvement in cost and performance; (2) besides (1), high quality (high sensitivity, improvement of head matching property, and the like) of heat-sensitive paper (heat-sensitive recording material) itself was realized; and (3) heat-sensitive recording systems were evaluated to be advantageous in view of user-friendliness, i.e., convenience, low costs, freedom from frequent maintenance, and the like as compared to other recording systems such as static recording, ink jet recording, PPC recording, and the like.

However, as heat-sensitive recording materials are used for facsimile machines, various printers, and the like and have become familiar to daily life, defects of heat-sensitive recording materials have also become well known. Namely, the following defects have been pointed out:

- discoloration by light;
- discoloration during storage at high temperature (when left in a vehicle, and the like);
- fading of a recorded image by chemical agents such as plasticizers in wrapping films, oils, organic solvents in marker pens, ink for ink jet printers, and the like;
- a lack of plain paper-like feeling (good stamping applicability such as good drying of stamps without bleeding, and the like, a recording surface that is matted and easy to read, good writing property with respect ot a pencil, and the like, resistance to stainining due to friction, and the like, and so forth), and the like.

Therefore, development and provision of a heat-sensitive recording material free from the above-mentioned defects and having high value have been demanded.

Recently, heat-sensitive recording materials have been widely used since they are relatively inexpensive and recording apparatus therefor are compact and free from frequent maintenance. Under such circumstances, competition in the marketing of heat-sensitive recording materials has become tough, and demand for heat-sensitive recording materials having higher performance that can be differentiated from conventional performance, and specifically heat-sensitive recording materials having high density of developed color, whiteness of background, sharpness, storage stability, good hue and sharpness for a full-color image recorded by an ink jet recording system, or the like has increased. Therefore, intensive investigations regarding various characteristics such as color developing property, storability, and the like of heat-sensitive recording materials are now being conducted in order to satisfy such demands.

The characteristics that heat-sensitive recording materials should have include, for example, (1) high sensitivity (capability to provide high density); (2) high whiteness of a background portion (non-printed portion) (low background fogging property); (3) superior image storability (specifically moisture resistance) after printing; (4) superior heat resistance after printing; (5) superior light fastness; (6) superior resistance to chemical substances; (7) sharpness and high image quality; (8) good hue and sharpness of colors for a full-color image recorded by an ink jet recording system; (9) good thermal head matching property and head resistance property by which thermal head abrasion is decreased; (10) plane paper-like feeling; (11) printing applicability that enables printing on a heat-sensitive recording layer, and stamping applicability free from bleeding; (12) applicability for high performance printers such as a high speed printer, and the like; and (13) environment applicability. Under the above-mentioned circumstances, it is demanded that all of these characteristics are simultaneously satisfied without deterioration of any of the characteristics. However, under the present circumstances, a heat-sensitive recording material that can satisfy all of the above-mentioned characteristics simultaneously has not been provided yet.

Specifically, in recent years, image stability that enables maintenance of a formed image for a long period is demanded. Furthermore, application of a heat-sensitive recording material in technical fields in which image reliability

over a long period is required is desired in view of user-friendliness of apparatuses and recording procedure.

Conventionally, 2,2-bis(4-hydroxyphenyl)propane (so-called "bisphenol A") has been widely used as an electron-accepting compound that reacts with an electron-donating colorless dye to develop color used for a heat-sensitive recording material. However, in such a system, a heat-sensitive recording material having satisfactory properties in view of sensitivity, background fogging property, image storability (specifically moisture resistance) and heat resistance has not been provided yet.

Furthermore, such a system also has a problem in view of (14) ink jet applicability. Namely, full color information is sometimes recorded on a heat-sensitive recording material using inks for ink jet recording. However, when ink jet recording is carried out on a recording surface of a conventional heat-sensitive recording material containing bisphenol A, hues of inks cannot be reproduced faithfully, sharp hues cannot be obtained, and when an image is already formed on the recording surface by heat-sensitive recording, the image sometimes fades. Furthermore, when the above-mentioned conventional heat-sensitive recording material is placed in contact with a medium having an image recorded by an ink jet printer, background fogging or fading of a recorded image sometimes occurs.

DISCLOSURE OF INVENTION

The present invention aims at solving the above-mentioned conventional problems and achieving the following objects.

Namely, the first object of the invention is to provide a heat-sensitive recording material having high sensitivity, capable of forming an image which has high density (has good image forming applicability), having superior chemical resistance after printing, preventing hue defect and bleeding of an ink jet image and fading of an image due to an ink for ink jet printing (has ink jet applicability), having, when used in a high performance printer that operates at a high speed or that has a partially glazed structure, a good thermal head matching property, less abrading a head and less staining the head (has good head applicability), and to provide a heat-sensitive recording material having the above-mentioned characteristics, providing an image which has sharpness, high qualty, and superior light fastness, having a heat-sensitive recording layer and/ or a protective layer on which printing and/or stamping can be carried out without bleeding, and capable of being prepared with a small coating amount at low cost (environment applicability), and, if desired, having plane paper-like feeling.

The second object of the invention is to provide a heat-sensitive recording material capable of suppressing the fogging density of a background portion (non-image portion) (background fogging).

The third object of the invention is to provide a heat-sensitive recording material having superior image storability after printing.

The fourth object of the invention is to provide a heat-sensitive recording material having superior light fastness after printing.

The fifth object of the invention is to provide a heat-sensitive recording material having superior whiteness of a background portion.

The sixth object of the invention is to provide a heat-sensitive recording material having superior moisture resistance of an image after printing.

The seventh object of the invention is to provide a heat-sensitive recording material having superior heat resistance of a formed image.

The inventors of the invention have done intensive studies regarding techniques for simultaneously satisfying, at high level, characterisitcs that heat-sensitive recording materials should have, and obtained the following findings.

<Provision of high sensitivity>

In order to provide high sensitivity, the following items (1) to (3) are important.

(1) Firstly, it is important to improve heat conduction from a thermal head to a heat-sensitive recording layer. For this purpose, it is effective to improve the surface smoothness of the recording surface of a heat-sensitive recording material and to provide a cushioning property to the recording surface. (2) Secondly, it is important to effectively utilize heat conducted from the thermal head. For this purpose, it is effective to make a substrate adiabatic and to thin down the heat-sensitive recording layer. (3) Thirdly, it is important to improve dissolution velocities of an electron-donating colorless dye and an electron-accepting compound in a sensitizer. For this purpose, it is effective to improve solubility, to decrease melt viscosity, and to decrease the particle sizes of raw materials. Hereinafter, items (1) to (3) are specifically explained.

(1) Improvement of heat conduction from thermal head to heat-sensitive recording layer

Since a certain amount of heat is necessary to develop color to a certain density on a heat-sensitive recording

layer, it is important to effectively transmit heat from a thermal head to a recording layer in order to improve the sensitivity of a heat-sensitive recording material. Heat conductivity of solid is astronomically higher than that of gas, and conductive heat is much higher than radiant heat. Therefore, it is effective to increase the contact rate of the heat-sensitive recording layer surface (hereinafter sometimes referred to as "recording surface") and the thermal head during printing, whereby heat from the thermal head can be effectively transmitted to the heat-sensitive recording layer.

In order to increase the contact rate of the recording surface and the thermal head, it is specifically effective to [1] increase the smoothness of the recording surface in advance, and to [2] increase the cushioning property of the heat-sensitive recording material, and the like (the smoothness of the recording surface and the cushioning property are physical properties necessary for the heat-sensitive recording material).

[1] In order to increase the smoothness of the recording surface, it is effective to improve flatness of a substrate. Specifically, it is desirable to use base paper having high flatness and/or to provide a primer layer including an oil-absorbing pigment as a main component on a substrate in order to compensate irregularity due to pulp, and the like. Furthermore, in order to increase smoothness, it is effective to conduct a heat calendar or super calendar treatment after a coating solution for the recording layer has been applied and the resultant coating has been dried.

[2] Furthermore, the effectiveness of improving the cushioning property of the heat-sensitive recording material (provision of cushioning property) is based on the following findings. That is, when thermal printing is carried out on a heat-sensitive recording material using a thermal head, a suitable pressure is applied to the heat-sensitive recording material and the thermal head using a platen roll. In order to increase the contact rate between the thermal head and the recording surface under the pressure, it is sufficient that the heat-sensitive recording material easily changes its shape. Therefore, it is effective as a specific means for providing a heat-sensitive material with a cushioning property to provide a primer layer containing an oil-absorbing pigment as a main component or to incorporate a pigment having a high oil-absorbing property in the heat-sensitive recording layer. Specifically, this concept for providing a cushioning property is also effective in increasing sensitivity when recording is conducted using a thermal head which has a partially glazed structure. Here, the partially glazed structure refers to a structure wherein, in a heat generating portion, a glazed layer having a convex (chevron-shaped) cross-section is disposed on a substrate.

(2) Effective utilization of heat conducted from thermal head

In order to effectively utilize heat conducted from a thermal head, it is effective to make a substrate adiabatic. Providing as many gaps as possible in the substrate is effective as a specific means for this purpose. In the case of a heat-sensitive recording material, for example, the means can be provision of a primer layer including a pigment which has a high oil-absorbing property to decrease the amount of a binder used in the primer layer as much as possible, incorporation of hollow particles in the primer layer, or the like.

Furthermore, it is effective to thin down the heat-sensitive recording layer in order to effectively utilize heat. Given that the heat capacity of a heat-sensitive recording layer contributes to sensitivity, the heat-sensitive recording layer contains many components those do not contribute to development of color, and the heat capacities of these components are unnecessarily consumed. Examples of such components include a releasing agent and waxs, which suppress adhesion between the thermal head and the recording layer, an oil-absorbing pigment, which absorbs melted components, binders, in which materials are dispersed and which provides film strength, and the like. Since the heat consumption by these components accounts for about 20% to 30% of the total heat consumption, it is expected to increase sensitivity by about 10% to 15% by reducing the amounts of these components by half.

According to the inventor's investigation, sensitivity can be increased by decreasing the amounts of a pigment and a binder in a recording layer. Since sensitivity can be increased unexpectedly by decreasing the amount of the binder, it is considered that factors other than heat capacity contribute to increased sensitivity. However, it is unclear what the factors are. It should be noted that, however, when the amount of the binder is simply decreased, a head matching property with respect to a thermal head, film strength, and the like deteriorate . Accordingly, it is important to use as effective incorporation rates as possible, i.e., to use desired components in desired layers in minimum amounts.

(3) Improvement of dissolution velocities of electron-donating colorless dye and electron-accepting compound in sensitizer

In the earlier stage of engeneering development in heat-sensitive recording materials, a sensitizer was selected as an agent which decreases melting points of an electron-donating colorless dye and an electron-accepting compound in order to develop color at a lower temperature. However, in this concept, there is a limitation in increasing sensitivity while keeping a temperature at which color development starts. Consistency between background fogging

prevention and increased sensitivity is difficult. Accordingly, the inventors considered a sensitizer as a material for dissolving an electron-donating colorless dye and an electron-accepting compound and investigated a sensitizer that realizes high sensitivity without unnecessarily decreasing a co-melting point, in other words, with keeping background fogging at a low level, and found that, in order to increase sensitivity, it is more advantageous to more rapidly diffuse the electron-donating colorless dye and the electron-accepting compound in the melted sensitizer. Accordingly, in order to increase sensitivity, it is advantageous and preferable to select a sensitizer having not only high solubility but also a low melt viscosity, and to decrease the dispersion particle size of the electron-donating colorless dye and the electron-accepting compound. It should be noted that, however, when the dispersion particle size is too small, background fogging becomes worse. Therefore, it is important to select a suitable size.

<Provision of matching property with respect to thermal head, and head durability>

Printing is carried out on a heat-sensitive recording material by bring a thermal head, which is a heat generating element, into direct contact with the recording surface of the recording material (surface of the heat-sensitive recording layer), and rubbing the recording surface with the head. Accordingly, the melted components in the recording layer sometimes adhere to the head and deposit as smutch thereon. Furthermore, the components physically abrade or corrode the surface of the thermal head and then the lifetime of the head sometimes shortens.
Accordingly, it is desirable to use the following means.

1) In view of prevention of stain on the head, it is important for a heat-sensitive recording material to absorb and retain materials melted by heat, such as a dye, a developer, a sensitizer, and the like. For this purpose, it is effective to use a pigment having a high oil-absorbing property in the recording layer, or to provide a primer layer including a pigment which has a high oil-absorbing property, or the like.
2) Furthermore, it is important to suppress the amount of ions ($Na^+$, $K^+$, and the like), which easily cause corrosion of the head, in components of a recording material.
3) In view of decreasing physical abrasion as much as possible, it is important to consider hardness, shape, particle size, and the like of a pigment.

<Compatibility of heat resistance or image storability (and chemical resistance) and background fogging>

A developed image is specifically vulnerable to moisture, and easily fades out due to the effect of heat or a reverse reaction caused by chemical agents such as oils and fats, plasticizers, and the like, since chemical reaction that is caused by heat melt and contact of a leuco dye and a developer, which chemical reaction is a principle of color development of heat-sensitive recording materials, is reversible reaction. Accordingly, problems regarding heat resistance, image storability (specifically moisture resistance) and chemical resistance, such as problems in which a developed image fades out due to heat or moisture during storage, or in daily life in which users may touch their hands, onto which a hand cream, any other cosmetic, oil or fat adheres, to the recording material, or in which the image may be brought into contact with a plastic product including a plasticizer, a product including an organic solvent or a leather product (an eraser, a desk mat or food wrapping film made of vinyl chloride, a marker pen, an ink for ink jet, a wallet, a commuter-pass holder, and the like).
In order to overcome the above-mentioned phenomenon due to the color development principle (dissapearance or fading of images), many invesitigations have been done. For example, [1] a measure to make a heat-sensitive recording material a so-called overcoat type material by forming a protective layer on a recording layer for the purpose of physical shielding, [2] a measure to add additives such as a cross-linking agent to a recording layer, or the like was done. However, even if a protective layer is provided, effects by heat and moisture cannot be completely suppressed. Furthermore, fading over time due to gradual permeation of oil or a plasticizer cannot be avoided. As a result, a heat-sensitive recording material has problems in that usage of the material is limited to short-time application such as measuring labels to be adhered to perishable foods sold in supermarkets, and the like, and that, even if a cross-linking substance is added, it takes substantially long period of time from color development to exhibit the effect thereof, ane the like. Therefore, storability, which is a basic characteristic, has not been satisfied yet.
Accordingly, as a result of the inventors' intensive investigations regarding improvement in storability, the inventors have found that a specific electron-accepting compound is useful for improvement in heat resistance and image storability (specifically moisture resistance) and for prevention of background fogging, and that background fogging can be further prevented by combining the compound with a specific sensitizer and/or a specific electron-donating colorless dye. Furthermore, the inventors have found that heat resistance, image storability (specifically moisture resistance) and light fastness can be further improved without deteriorating background fogging by combining the compound with a specific image stabilizer. According to the above findings, it is also possible to provide not only heat resistance and image storability (specifically moisture resistance), which are difficult to realize in conventional techniques in which an overcoat is formed to provide storability, but also stamping applicability and handling property at a high level. Accordingly, stamping applicability and image storability (specifically moisture resistance) or heat resistance can be achieved simultaneously.

<Improvement in light fastness>

A heat-sensitive recording material having superior light fastness is necessary for some applications. However, a leuco dye, which contributes to image formation, easily decompose due to ultraviolet light, and the like, and fades after a long-time exposure to natural light. Therefore, the material including a leuco dye has a problem in point of light fastness.

In order to improve light fastness, it is important to provide a means for preventing decomposition of a leuco dye due to light. For this purpose, it is specifically effective to incorporate an ultraviolet light absorbent (an image stabilizer), which shuts out ultraviolet light that provides high level energy, in a heat-sensitive recording layer or a protective layer. Specifically, it is more effective to incorporate microcapsules encapsulating a liquid ultraviolet light absorbent in a protective layer in order to effectively shut out ultraviolet light before it arrives at the heat-sensitive recording layer.

<Provision of printing applicability>

Offset printing is sometimes conducted on the recording surface of a heat-sensitive recording material (surface of a heat-sensitive recording layer) depending on application. For such an application, the material is required to have enough surface strength to bear a printing vecocity of more than 100 m/min in a rotary form printing machine, and to have a dampening water-absorbing property. For this purpose, it is important to optimize the incorporation rates of a pigment and a binder in a heat-sensitive recording layer. A preferable pigment for this purpose is an oil-absorbing pigment such as calcium carbonate, or the like. A preferable binder for this purpose is polyvinyl alcohol (PVA). Sulfo-modified polyvinyl alcohol, diacetone-modified polyvinyl alcohol and acetoacetyl-modified polyvinyl alcohol are specifically preferred.

<Provision of plain paper-like feeling>

As a result of wide use of heat-sensitive recording materials as recording paper for facsimile machines in offices and at home and as recording paper for various printers, the heat-sensitive recording materials are compared with general paper (PPC paper, and woodfree paper such as a notebook, writing paper, or the like), and differences between the heat-sensitive recording materials and general paper, such as a slick surface, a bad writing property, and, when held by a hand, thinness and unsufficient strengh, have been often pointed out. These are some of reasons why facsimile machines used in offices have been recently replaced with PPC type facsimile machines using plane paper. In view of these points, it is important to provide heat-sensitive recording materials with hand feeling and user-friendliness close to those of woodfree paper, by [1] thickening base paper that is used as a substrate to improve strength, and/or by [2] providing a protective layer to provide low surface gloss, a writing property and stamping applicability, or the like.

Here, a heat-sensitive recording material having plain paper-like feeling is considered to have no defects of converted paper which conventional heat-sensitive recording paper has, and to have a matted surface, and, when touched by hands, to have no slick feeling, and to have resistance to abrasion and stain, and to provide a recorded image having fading resistance, and the like. Accordingly, materials having a protective layer on a recording layer have been proposed to provide plane paper-like feeling. However, in conventional protective layers, too much importance was placed on hand feeling, appearance (matted surface), a writing property, and the like, and stamping applicability was not considered.

However, the inventors thouought that stamping applicability (no bleeding, rapid drying of a stamped image, or the like) is specifically important in view of traditional custom in Japan, and have investigated improvement in a protective layer for heat-sensitive recording materials having a plain paper-like property.

As a result, the inventors have found that the following materials are useful as a pigment and a binder of a protective layer in order to obtain plain paper-like feeling including stamping applicability.

Those having a suitable particle size, a suitable oil-absorption amount are preferred as a pigment, in order to place importance on stamping applicability, appearance (matted surface) and a writing property. When the particle size is too large, image quality sometimes becomes worse. When the particle size is too small, a writing property and appearance sometimes become worse. Furthermore, when the oil-absorption amount is too large, the level of opacity of the protective layer raises, which leads to a decreased recording density. When the oil-absorption amount is too small, stamping applicability (drying) tends to become worse.

Those obtained by mixing PVA and starch in a suitable ratio are preferable as the binder, in order to prevent deterioration of stamping applicability (bleeding). So-called completely-saponified PVA (having a saponification degree of about 93% or more) are preferable as PVA, in view of provision of stamping applicability (drying).

<Provision of high sensitivity and head matching property in combination with apparatus>

The reason why heat-sensitive recording materials have been recently applied to many fields and applications is that a heat-sensitive recording system has advantages such as miniturization, low running cost, freedom from frequent maintenance, and that techniques regarding both printers (hardware) and recording paper (medium) have been improved. In hardware, for example, high performance printers which have high performance similar to that of conventional dot printers and laser printers, such as those having a recording speed of 10 inch (about 25 cm) / sec, a maximum recording width of A0 size (about 900 mm) and resolution of 600 dpi (24 dot/mm), were developped. Therefore, it is important to produce hardware having an optimal design and a controlling means by combining techniches according to application thereof.

Accordingly, the high performance printer is preferably a high speed printer having a recording velocity of not less than 10 cm/sec, a printer having a thermal head which has a partially glazed structure, or the like. However, when a conventional heat-sensitive recording material is combined with the high speed printer having a recording velocity of not less than 10 cm/sec, sensitivity is sometimes insufficient. When it is combined with the printer having a thermal head which has a partially glazed structure, head stain tends to occur.

Accordingly, the inventors investigated the optimal design of heat-sensitive recording materials, and have found that, even when specifically combined with the high speed printer that has a recording velocity of not less than 10 cm/sec or the printer having a thermal head which has a partially glazed structure, a heat-sensitive recording material, in which a specific developer (an electron-accepting compound) is selectively used, not only satisfies, at a high level, the above-mentioned performance necessary for heat-sensitive recording materials but also can exhibit high sensitivity and a good head matching property.

<Improvement in image quality>

In some cases, for examples, in the case where a facximile machine receives a photograph, quality of recorded image is important for hardware (apparatuses) using a heat-sensitive recording material. In order to improve quality of recorded images, the inventors have found that it is effective to provide a primer layer including an oil-absorbing pigment as a main component, and specifically to apply a primer layer by a curtain coating method or a blade coating method (specifically by a blade coating method).

<Decrease of environmental burden>

Recently, a system that less provides a burden on environment has been socially demanded, and this it is true in the field of heat-sensitive recording materials. In order to decrease environmental burden, it is important to satisfy required performance by using smaller amounts of materials and a smaller amount of energy. For this purpose, the inventors have found that applying a heat-sensitive recording layer, or the like by a curtain coating method is effective in improvement in color development density, and that applying a plurality of layers simultaneously to form a multi-layered structure is effective in decreasing energy consumption during drying and handling. That is, such measures can provide the same color development density even when smaller amounts of materials and lower energy are used.

The invention is based on the above-mentioned findings.

The first aspect of the invention is a heat-sensitive recording material comprising a substrate and a heat-sensitive recording layer provided thereon, the layer comprising an electron-donating colorless dye and an electron-accepting compound that reacts with the electron-donating colorless dye to develop color, wherein the electron-accepting compound is a compound represented by the following general formula (1), provided that the electron-accepting compound is not 2,4-bis(phenylsulfonyl)phenol, and the density of an image portion that has been irradiated with a fluorescent lamp at 500,000 Lux·h is retained at a rate of not less than 80% relative to that of the image portion before irradiation:

General formula (1)

$$R^1\text{-Ph-}SO_2R^2$$

wherein $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a phenyl group, which is optionally substituted with a substituent comprising -$SO_2R^2$.

Since this heat-sensitive recording material uses the electron-accepting compound represented by general formula (1) as one of the color development components, it can improve sensitivity while keeping background fogging at low level, and can simultaneously improve long-term storability of a formed image (hereinafter referred to as image storability), chemical resistance and a head matching property with respect to a thermal head. Furthermore, since the density of an image portion that has been irradiated with a fluorescent lamp at 500,000 Lux·h is retained at a rate of not less than 80% relative to that of the image portion before irradiation, a fast image can be obtained and the material is excellent in light fastness.

The second aspect of the invention is a heat-sensitive recording material comprising a substrate and a heat-sensitive recording layer provided thereon, the layer comprising an electron-donating colorless dye and an electron-accepting compound that reacts with the electron-donating colorless dye to develop color, wherein the electron-accepting compound is a compound represented by the following general formula (1) and the volume mean diameter of the electron-accepting compound is not more than 1.0 μm, the whiteness degree of a non-image portion of the heat-sensitive recording layer measured according to JIS P8123 is 75% to 90%, and a level of density of an image portion, which has been retained under environmental conditions of 40°C and relative humidity of 90% for 24 hours after printing, is not more than 50% lower than that of the image portion before retention:

General formula (1)

$$R^1\text{-Ph-}SO_2R^2$$

wherein $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a phenyl group, which is optionally substituted with a substituent comprising -$SO_2R^2$.

The heat-sensitive recording material uses the electron-accepting compound represented by general formula (1) as one of the color development components. Thereby, it can maintain background fogging at low level, even when the electron-accepting compound is used as particles having small size. Moreover, the material can achieve high sensitivity simultaneously. Furthermore, long-term storability of a formed image (hereinafter referred to as image storability), chemical resistance and a head matching property with respect to a thermal head can also be improved simultaneously. Moreover, since the non-image portion has a whiteness degree (JIS P8123) in the range of 75-90%, the image does not dull and an image having high contrast can be obtained. Furthermore, since a level of density of an image portion, which has been retained under environmental conditions of a high temperature and a high humidity, is not more than 50% lower than that of the image portion before retention, a fast image having good moisture resistance can be obtained, and the image can be stored stably for a long period of time. The material can be applied to fields in which long-term image reliability is required.

The third aspect of the invention is a heat-sensitive recording material comprising a substrate and a heat-sensitive recording layer provided thereon, the layer comprising an electron-donating colorless dye and an electron-accepting compound that reacts with the electron-donating colorless dye to develop color, wherein a level of density of a formed image, which has been left under environmental conditions of a temperature of 70°C and a relative humidity of 30% for 24 hours after printing, is not more than 50% lower than that of the formed image before leaving, and an image density after a heat source has been brought into contact with the heat-sensitive recording material at 70°C for 5 seconds is not more than 0.15.

Since a level of density of a formed image, which has been left under environmental conditions of a temperature of 70°C and a relative humidity of 30% for 24 hours after printing, is not more than 50% lower than that of the formed image before leaving, heat resistance of the formed image is excellent, and the formed image can be maintained at a high density for a long period of time. Accordingly, the material can be applied to fields in which image reliability not affected by heat is required for a long period of time, such as fields of storage of important documents, advance tickets, receipts, cash vouchers, and the like. Furthermore, the image density after a heat source has been brought into contact with a heat-sensitive recording material at 70°C for 5 seconds is not more than 0.15. Thereby, background is not colored even after the image is left at a high temperature for a long period of time.

The fourth aspect of the invention is a heat-sensitive recording material comprising a substrate and a heat-sensitive recording layer provided thereon, the layer comprising an electron-donating colorless dye, an electron-accepting compound that reacts with the electron-donating colorless dye to develop color and a sensitizer, wherein the electron-accepting compound is a compound represented by the following general formula (1), and a level of density of a formed image, which has been left under environmental conditions of a temperature of 40°C and a relative humidity

of 90% for 24 hours after printing, is not more than 50% lower than that of the formed image before leaving, and the sensitizer is at least one kind selected from 2-benzyloxynaphthalene, dimethylbenzyl oxalate, m-terphenyl, ethylene glycol tolyl ether, p-benzylbiphenyl, 1,2-diphenoxymethylbenzene, diphenylsulfone and 1,2-diphenoxyethane:

General formula (1)

$$R^1\text{-Ph-}SO_2R^2$$

wherein $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a phenyl group, which is optionally substituted with a substituent comprising -$SO_2R^2$.

Since the heat-sensitive recording material uses the electron-accepting compound represented by general formula (1) as one of the color development components, sensitivity can be improved while keeping background fogging at low level. Moreover, long-term storability of a formed image, chemical resistance and a head matching property with respect to a thermal head can be improved simultaneously. Furthermore, a level of density of a formed image, which has been left under environmental conditions of a temperature of 40°C and a relative humidity of 90% for 24 hours after printing, is not more than 50% lower than that of the formed image before leaving. Thereby, the material is excellent in moisture resistance of the formed image and, even when left under a high humidity, can maintain the formed image at high density for a long period of time. Accordingly, the material can be applied to fields in which long-term image reliability is required, such as fields of storage of important documents, advance tickets, receipts, cash vouchers, and the like, specifically in high humid seasons such as a rainy season, summer, and the like. Furthermore, since the heat-sensitive recording layer includes a specific sensitizer, color development components can be well diffused by decreasing solution viscosity, and sensitivity is effectively improved without deterioration of background fogging.

## BEST MODE FOR CARRYING OUT THE INVENTION

Hereinafter the heat-sensitive recording material of the invention will be specifically explained.

The heat-sensitive recording material of the invention has one or at least two heat-sensitive recording layers on a substrate, and preferably has a protective layer. Furthermore, if required, the material may have any other layer such as an intermediate layer, or the like.

<Heat-sensitive recording layer>

The heat-sensitive recording layer includes at least an electron-donating colorless dye and an electron-accepting compound that reacts with the electron-donating colorless dye to develop color, and preferably includes an image stabilizer (an ultraviolet light blocking agent), an inorganic pigment, an adhesive and a sensitizer. If required, the layer may include any other component.

-Electron-donating colorless dye-

The heat-sensitive recording layer used in the invention includes an electron-donating colorless dye as a color-developing component. The electron-donating colorless dye can be selected from conventionally known dyes. Examples thereof include, for example, 2-anilino-3-methyl-6-diethylaminofluorane, 2-anilino-3-methyl-6-dibutylaminofluorane, 2-anilino-3-methyl-6-(N-ethyl-N-isoamylamino)fluorane, 2-anilino-3-methyl-6-(N-ethyl-N-propylamino)fluorane, 2-anilino-3-methyl-6-di-n-amylaminofluorane, 2-anilino-3-methyl-6-(N-ethyl-N-p-tolylamino)fluorane, 2-anilino-3-methyl-6-N-ethyl-N-sec-butylaminofluorane, 3-di-(n-pentylamino)-6-methyl-7-anilinofluorane, 3-(N-isoamyl-N-ethylamino)-6-methyl-7-anilinofluorane, 3-(N-n-hexyl-N-ethylamino)-6-methyl-7-anilinofluorane, 3-[N-(3-ethoxypropyl)-N-ethylamino]-6-methyl-7-anilinofluorane, 3-di-(n-butylamino)-7-(2-chloroanilino)fluorane, 3-diethylamino-7-(2-chloroanilino)fluorane, 3-(N-cyclohexyl-N-methylamino)-6-methyl-7-anilinofluorane, and the like.

Among these, it is specifically preferable to include at least one kind selected from the group consisting of 2-anilino-3-methyl-6-diethylaminofluorane, 2-anilino-3-methyl-6-dibutylaminofluorane, 2-anilino-3-methyl-6-(N-ethyl-N-isoamylamino)fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorane. In addition, these electron-donating colorless dyes can be used alone or in combination in a single heat-sensitive recording layer.

Specifically, by including at least one kind of selected from the above-mentioned group as the electron-donating colorless dye, color development density can be increased while keeping background fogging at low level. In addition, the image storability, heat resistance and moisture resistance of a formed image portion can be simultaneously

improved. In other words, when the heat-sensitive recording layer includes any of those electron-donating colorless dyes, increase in sensitivity at high level, decrease in background fogging level and improvement in storability can be simultaneously satisfied.

In preparation of a coating solution for forming a heat-sensitive recording layer (hereinafter sometimes referred to as a "coating solution for a heat-sensitive recording layer"), the particle size (volume mean diameter) of the electron-donating colorless dye is preferably not more than 1.0 μm, and more preferably 0.4 to 0.7 μm. When the volume mean diameter exceeds 1.0 μm, heat sensitivity sometimes decreases, and, when the volume mean diameter is less than 0.4 μm, background fogging sometimes deteriorates.

The volume mean diameter can be easily measured by a laser diffraction type size distribution measuring instrument (e.g., trade name: LA500, manufactured by Horiba, Inc.), or the like.

The coating amount of the electron-donating colorless dye is preferably 0.1 to 1.0 $g/m^2$, and, in view of color development density and background fogging, more preferably 0.2 to 0.5 $g/m^2$.

-Electron-accepting compound-

In the first, second and fourth aspects, the heat-sensitive recording layer used in the invention includes at least one kind of the compound represented by general formula (1) as an electron-accepting compound that reacts with the electron-donating colorless dye during heating to develop color. In addition, in the third aspect, it is preferable to include this compound in the heat-sensitive recording layer. By including the compound as an electron-accepting compound, sensitivity can be increased while keeping background fogging at low level. Furthermore, long-term storability of a formed image (image storability, heat resistance and moisture resistance), chemical resistance, ink jet applicability and a head matching property with respect to a thermal head can be simultaneously improved.

General formula (1):

$$R^1\text{-Ph-}SO_2R^2$$

In the formula, $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a phenyl group, which is optionally substituted with a substituent having -$SO_2R^2$. However, 2,4-bis(phenylsulfonyl)phenol is excluded from the first aspect of the invention.

The alkyl group represented by $R^1$ is preferably an alkyl group having 1 to 3 carbon atoms, and more preferably a methyl group, an ethyl group, an isopropyl group, or the like. Among these, $R^1$ is specifically preferably a hydroxyl group.

$R^3$ represents an alkyl group, and the alkyl group preferably has 1 to 4 carbon atoms, and is specifically preferably an isopropyl group, or the like. Ph may be a substituted phenyl group wherein the phenyl group is substituted with a "substituent including -$SO_2R^2$", and $R^2$ of the substituent may be substituted with a methyl group, a halogen atom, or the like. Examples of the substituent include -$CH_2$-$C_6H_5$-NHCONH-$SO_2$-$C_6H_5$, -$SO_2$-$C_6H_4$-$CH_3$, -$SO_2$-$C_6H_4$-Cl, and the like. Furthermore, in the second to fourth aspects, the substituent can be -$SO_2$-$C_6H_5$.

Among these, $R^2$ is preferably -NH-Ph, and specifically preferably -NH-$C_6H_5$.

Preferable examples of the compound represented by general formula (1) include 4-hydroxybenzenesulfoneanilide (= p-N-phenylsulfamoylphenol), p-N-(2-chlorophenyl)sulfamoylphenol, p-N-3-tolylsulfamoylphenol, p-N-2-tolylsulfamoylphenol, p-N-(3-methoxyphenyl)sulfamoylphenol, p-N-(3-hydroxyphenyl)sulfamoylphenol, p-N-(4-hydroxyphenyl)sulfamoylphenol, 2-chloro-4-N-phenylsulfamoylphenol, 2-chloro-4-N-(3-hydroxyphenyl)sulfamoylphenol, 4'-hydroxy-p-toluenesulfoneanilide, 4,4'-bis (p-toluenesulfonylaminocarbonylamino)diphenylmethane (= BTUM), 4-hydroxy-4'-isopropoxydiphenylsulfone, and the like. In addition, in the second to fourth aspect of the invention, the compound can be 2,4-bis (phenylsulfonyl)phenol. However, in the invention, the compound of formula (1) is not limited to these compounds.

Among the electron-accepting compounds represented by general formula (1), 4-hydroxybenzenesulfoneanilide is the most preferable in view of balance between image storability, heat resistance or moisture resistance and background fogging. When the electron-accepting compound includes 4-hydroxybenzenesulfoneanilide, improvements in sensitivity, image storability, moisture resistance and a head matching property can be more effectively achieved, and increase in background fogging level of a background portion (fogging density of a background portion) is not caused.

The amount of the electron-accepting compound in a single heat-sensitive recording layer is preferably 50 to 400% by mass, and more preferably 100 to 300% by mass relative to the mass of the electron-donating colorless dye.

Any other known electron-accepting compound may be used in combination with the electron-accepting compound represented by general formula (1), so long as the effects of the invention (specifically decrease in background

fogging level, improvement in sensitivity, and improvements in image storability, heat resistance, moisture resistance, chemical resistance and a head matching property) are not deteriorated. Furthermore, in the third aspect of the invention, any other known electron-accepting compound can be used instead of the electron-accepting compound of general formula (1).

The known electron-accepting compound is properly selected and used. It is spedicfically preferably a phenolic compound or a salicylic acid derivative or a polyvalent metal salt thereof from the viewpoint of suppression of background fogging.

Examples of the phenolic compound include, for example, 2,2'-bis(4-hydroxyphenol)propane (bisphenol A), 4-t-butylphenol, 4-phenylphenol, 4-hydroxydiphenoxide, 1,1'-bis(4-hydroxyphenyl)cyclohexane, 1,1'-bis(3-chloro-4-hydroxyphenyl)cyclohexane, 1,1'-bis(3-chloro-4-hydroxyphenyl)-2-ethylbutane, 4,4'-sec-isoctylidenediphenol, 4,4'-sec-butylidenediphenol, 4-tert-octylphenol, 4-p-methylphenylphenol, 4,4'-methylcyclohexylidenephenol, 4,4'-isopentylidenephenol, 4-hydroxy-4-isopropyloxydiphenylsulfone, benzyl p-hydroxybenzoate, and the like.

Examples of the salicylic acid derivative include, for example, 4-pentadecylsalicylic acid, 3,5-di-(α-methylbenzyl)salicylic acid, 3,5-di-(tert-octyl)salicylic acid, 5-octadecylsalicylic acid, 5-α-(p-α-methylbenzylphenyl)ethylsalicylic acid, 3-α-methylbenzyl-5-tert-octylsalicylic acid, 5-tetradecylsalicylic acid, 4-hexyloxysalicylic acid, 4-cyclohexyloxysalicylic acid, 4-decyloxysalicylic acid, 4-dodecyloxysalicylic acid, 4-pentadecyloxysalicylic acid, 4-octadecyloxysalicylic acid, and the like, and zinc salts, aluminum salts, calcium salts, copper salts and lead salts thereof, and the like.

When the known electron-accepting compound is used in combination with the compound of formula (1), the amount of the electron-accepting compound represented by general formula (1) is preferably not less than 50% by mass, and specifically preferably not less than 70% by mass relative to the total mass of the electron-accepting compounds.

In preparation of a coating solution for forming a heat-sensitive recording layer, the particle size (volume mean diameter) of the electron-accepting compound is preferably not more than 1.0 μm, and more preferably 0.4 to 0.7 μm. When the volume mean diameter exceeds 1.0 μm, heat sensitivity sometimes decreases. When the volume mean diameter is less than 0.4 μm, background fogging sometimes deteriorates. In the second aspect of the invention, the volume mean diameter is 1.0 μm. Generally, a decreased particle size tends to cause background fogging to deteriorate. However, background whiteness is not deteriorated in the invention even when particles having a small size of less than 1.0 μm are used.

The volume mean diameter can also be readily measured by using a laser diffraction type size distribution measuring instrument (e.g., LA500 manufactured by Horiba, Inc.), or the like.

-Sensitizer-

The heat-sensitive recording layer used in the invention preferably includes a sensitizer. Specifically, in view of further improvement in sensitivity, the layer preferably includes at least one kind selected from the group consisting of 2-benzyloxynaphthalene, dimethylbenzyl oxalate, m-terphenyl, ethylene glycol tolyl ether, p-benzylbiphenyl, 1,2-diphenoxymethylbenzene, 1,2-diphenoxyethane and diphenylsulfone (hereinafter sometimes referred to as "sensitizer according to the invention"). When the heat-sensitive recording layer includes any of these sensitizers, dissolution viscosity lowers, and a color development component can be diffused well, and sensitivity can be effectively improved without deterioration of background fogging.

The total amount of the sensitizer selected in the heat-sensitive recording layer is preferably 75 to 200 parts by mass, and more preferably 100 to 150 parts by mass relative to 100 parts by mass of the electron-accepting compound (preferably 4-hydroxybenzenesulfoneanilide).

When the sensitizer is contained in the layer such that the amount of the sensitizer is suitable for the amount of the electron-accepting compound, sensitivity can be effectively improved without deterioration of other characteristics.

When the amount is in the above-mentioned range, the effect of improvement in sensitivity can be large. Furthermore, image storability, heat resistance and moisture resistance can also be improved.

Any other sensitizer selected from conventionally known ones can be used in combination with the sensitizer selected from the above-mentioned group, so long as the effects of the invention are not deteriorated.

When a conventional sensitizer is used in combination, the amount of the sensitizer selected from the above-mentioned group is preferably not less than 50% by mass, and more preferably not less than 70% by mass relative to the total amount of the sensitizers included in the layer.

Examples of other sensitizer include, for example, aliphatic monoamide, aliphatic bisamide, stearylurea, di(2-methylphenoxy)ethane, di(2-methoxyphenoxy)ethane, β-naphthol(p-methylbenzyl)ether, α-naphthylbenzylether, 1,4-butanediol-p-methylphenylether, 1,4-butanediol-p-isopropylphenylether, 1,4-butanediol-p-tert-octylphenylether, 1-phenoxy-2-(4-ethylphenoxy)ethane, 1-phenoxy-2-(chlorophenoxy)ethane, 1,4-butanediolphenylether, diethyleneglycolbis(4-methoxyphenyl)ether, 1,4-bis(phenoxymethyl)benzene, and the like.

-Image stabilizer (ultraviolet light absorbent)-

The heat-sensitive recording layer used in the invention preferably includes an image stabilizer (including an ultraviolet light absorbent). The ultraviolet light absorbent may be microcapsuled. By incorporating the image stabilizer, storability of a developed image (image storability, heat resistance and moisture resistance) can be further improved.

As the image stabilizer, for example, a phenol compound, specifically a hindered phenol compound is effective. Examples thereof include, for example, 1,1,3-tris(2-methyl-4-hydroxy-5-tert-butylphenyl)butane, 1,1,3-tris(2-methyl-4-hydroxy-5-cyclohexylphenyl)butane, 1,1,3-tris(2-ethyl-4-hydroxy-5-cyclohexylphenyl)butane, 1,1,3-tris(3,5-di-tert-butyl-4-hydroxyphenyl)butane, 1,1,3-tris(2-methyl-4-hydroxy-5-tert-butylphenyl)propane, 2,2'-methylene-bis(6-tert-butyl-4-methylphenol), 2,2'-methylene-bis(6-tert-butyl-4-ethylphenol), 4,4'-butylidene-bis(6-tert-butyl-3-methylphenol), 4,4'-thio-bis(3-methyl-6-tert-butylphenol), and the like. These image stabilizers can be used alone or in combination.

Among these, 1,1,3-tris(2-methyl-4-hydroxy-5-tert-butylphenyl) butane and 1,1,3-tris(2-methyl-4-hydroxy-5-cyclohexylphenyl)butane are specifically preferred. When the heat-sensitive recording layer includes any of these image stabilizers, transition of color development reaction (forward reaction) to reverse reaction can be suppressed, image storability and moisture resistance can be further improved. At the same time, the image stabilizer can contribute to improvement in light fastness.

The total amount of the image stabilizer in a single heat-sensitive recording layer is preferably 10 to 100 parts by mass, and more preferably 20 to 60 parts by mass relative to 100 parts by mass of the electron-donating colorless dye in view of suppression of background fogging and effective improvement in image storability, heat resistance and moisture resistance.

Moreover, when any of the above-mentioned image stabilizers other than 1,1,3-tris(2-methyl-4-hydroxy-5-tert-butylphenyl)butane and 1,1,3-tris(2-methyl-4-hydroxy-5-cyclohexylphenyl)butane is used in combination with at least one of the two image stabilizers, the amount of 1,1,3-tris(2-methyl-4-hydroxy-5-tert-butylphenyl)butane and/or 1,1,3-tris (2-methyl-4-hydroxy-5-cyclohexylphenyl)butane in a single heat-sensitive recording layer is preferably at least 50% by mass, and more preferably at least 70% by mass relative to the total mass of the image stabilizers.

Examples of the ultraviolet light absorbent include the ultraviolet light absorbents shown below.

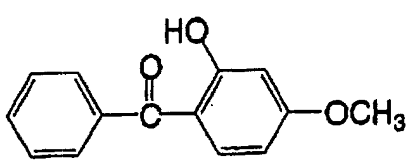

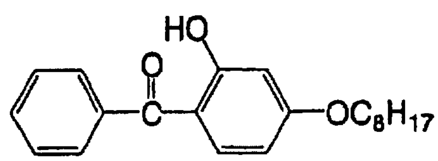

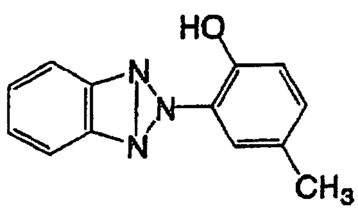

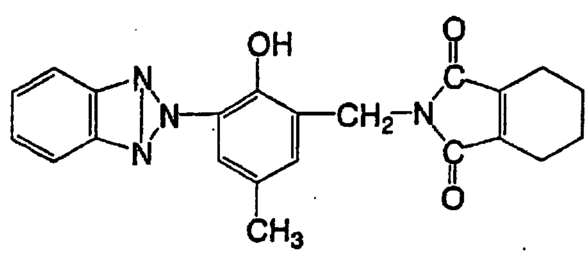

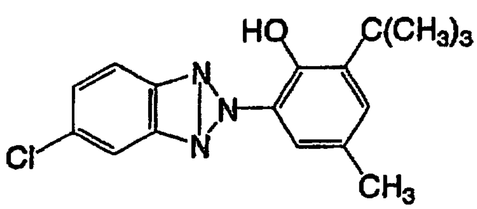

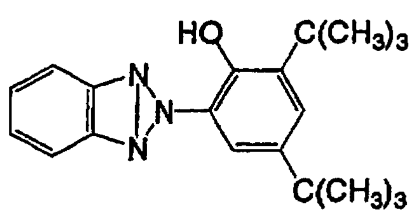

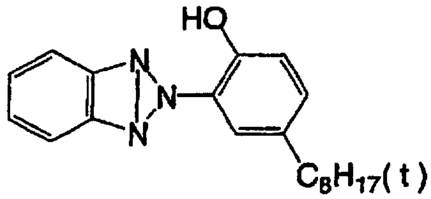

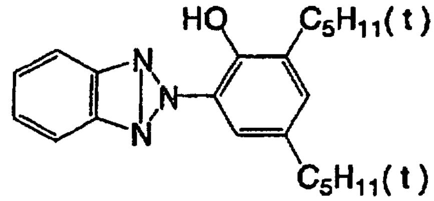

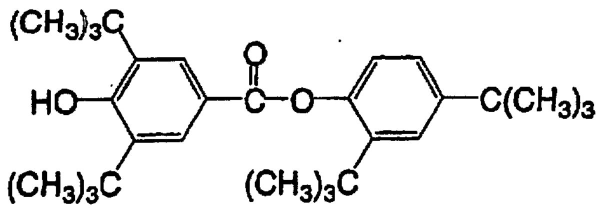

The amount of the ultraviolet light absorbent in a single heat-sensitive recording layer is preferably 10 to 300 parts by mass, and more preferably 30 to 200 parts by mass relative to 100 parts by mass of the electron-donating colorless dye from the viewpoint of effective improvement in image storability, heat resistance and moisture resistance.

-Inorganic pigment-

The heat-sensitive recording layer used in the invention preferably includes an inorganic pigment, specifically at least one kind selected from calcite calcium carbonate, amorphous silica and aluminum hydroxide (inorganic pigments according to the invention). By incorporating the inorganic pigment, a head matching property with respect to a thermal head with which the layer is brought into contact can be further improved. At the same time, stamping applicability, printing applicability and plain paper-like property can be provided.

(Light) calcium carbonate generally has crystalline forms of calcite, aragonite, baterite, and the like. Among these, calcite (light) calcium carbonate is preferred in view of color development density and prevention of head stain when recording is conducted with a thermal head and in view of an absorbing property, hardness, or the like. Among these, those having a spindle-like or scalenohedron-like particle shape are specifically preferred. The calcite (light) calcium carbonate can be prepared by a conventional preparation method.

The average particle size (volume mean diameter) of the calcite (light) calcium carbonate is preferably 1 to 3 µm. The volume mean diameter can be measured in the same manner as the method for measuring the volume mean diameter of the electron-donating colorless dye, or the like.

The amount of the "inorganic pigment according to the invention" in a single heat-sensitive recording layer is preferably 50 to 500 parts by mass, more preferably 70 to 350 parts by mass, and specifically preferably 90 to 250 parts by mass relative to 100 parts by mass of the electron-accepting compound in view of improvement in color development density and prevention of adhesion of foregin matter to a thermal head.

Furthermore, any other inorganic pigment can be used in combination with the above-mentioned inorganic pigment according to the invention to such an extent that the effects of the invention (specifically improvement in a head matching property, printing applicability and plain paper-like property) are not deteriorated.

Examples of any other inorganic pigment include calcium carbonate other than calcite (light) calcium carbonate, barium sulfate, lithpone, agalmatolite, kaolin, calcined kaolin, magnesium carbonate, magnesium oxide, and the like.

The volume mean diameter of any other inorganic pigment measured by a laser diffraction type size distribution measuring instrument (e.g., LA500 manufactured by Horiba, Inc., or the like) is preferably 0.3 to 1.5 µm, and more preferably 0.5 to 0.9 µm.

When the inorganic pigment according to the invention is used in combination with any other inorganic pigment, the ratio of the total mass (V) of the "inorganic pigment according to the invention" and the total mass (W) of any other inorganic pigment (V/W) is preferably 100/0 to 60/40, and more preferably 100/0 to 80/20.

Furthermore, an inorganic pigment having Mohs hardness of not more than 3 is preferred in view of suppression of abrasion of a thermal head. The "Mohs hardness" means Mohs hardness described in "English-Japanese

Plastic Industrial Dictionary, 5th eddition, p. 616" (Shin Ogawa, Kogyo Chosakai Publishing Co., Ltd.). Examples of the inorganic pigment having Mohs hardness of not more than 3 include calcium carbonate, aluminum hydroxide, and the like.

A mixture of the inorganic pigment according to the invention and magnesium carbonate and/or magnesium oxide is preferable since it is effective in suppression of background fogging. The content of magnesium carbonate and/or magnesium oxide is preferably 3 to 50% by mass, and specifically preferably 5 to 30% by mass relative to the total mass of the inorganic pigments.

-Adhesive-

The heat-sensitive recording layer used in the invention preferably includes, as an adhesive (or a protective colloid at the time of dispersion), at least one kind selected from sulfo-modified polyvinyl alcohol, diacetone-modified polyvinyl alcohol and acetoacetyl-modified polyvinyl alcohol (i.e., modified polyvinyl alcohols (hereinafter sometimes referred to as "specific modified PVA"). By incorporating the specific modified PVA in the heat-sensitive recording layer as an adhesive, plain paper-like feeling can be provided, and adhesive force between the heat-sensitive recording layer and the substrate can be increased to prevent troubles such as peeling of paper that may occur during offset printing, or the like, which can lead to improvement in printing applicability. Furthermore, color development density when the recording material is recorded with a thermal head can be increased while background fogging is more suppressed during recording, which can lead compatibility between improvement in sensitivity and further decrease in background fogging at high level.

The specific modified PVAs can be used alone or in combination, or in combination with any other modified PVA or polyvinyl alcohol (PVA).

When any other modified PVA or PVA is used in combination, the rate of the specific modified PVA is preferably not less than 10% by mass, and more preferably not less than 20% by mass relative to the total mass of the adhesive components.

The specific modified PVA is preferably one having a saponification degree of 85 to 99% by mole.

When the saponification degree is less than 85% by mole, water resistance against danmpening water used during offset printing is insufficient, which tends to cause so-called peeling of paper. On the other hand, when the amount of the modified PVA to be added is increased in order to avoid such peeling of paper, color development density sometimes decreases. Furthermore, when the saponification degree exceeds 99% by mole, unsolved products tend to remain during preparation of a coating solution, which sometimes results in a defective coating film.

For the purpose of avoiding deterioration of the effects of the invention, when any other modified PVA and/or PVA is used in combination, the saponification degree of any other modified PVA and/or PVA is preferably in the above-mentioned range.

Specifically, the polymerization degree of the specific modified PVA is preferably 200 to 2000.

When the polymerization degree is less than 200, peeling of paper easily occurs during offset printing. Furthermore, when the addition amount thereof is increased in order to avoid such peeling of paper, color development density sometimes decreases. Furthermore, when the polymerization degree exceeds 2000, the modified PVA becomes hardly-soluble in a solvent (water), and the viscosity of liquid during preparation increases, which makes preparation of a coating solution for forming a heat-sensitive recording layer and the application thereof difficult.

For the purpose of avoiding deterioration of the effects of the invention, when any other modified PVA and/or PVA is used in combination, the polymerization degree of any other modified PVA and/or PVA is preferably in the above-mentioned range.

The polymerization degree used herein refers to an average polymerization degree obtained by the method described in JIS-K6726 (1994).

The content of the specific modified PVA in the heat-sensitive recording layer is preferably 30 to 300 parts by mass, more preferably 70 to 200 parts by mass, and specifically preferably 100 to 170 parts by mass relative to 100 parts by mass of the electron-donating colorless dye in view of improvement in color development density and provision of offset printing applicability (prevention of peeling of paper, or the like).

The specific modified PVA functions not only as an adhesive for increasing adhesive force between layers but also as a dispersing agent, a binder, and the like.

Next, each of the specific modified PVAs, i.e., sulfo-modified polyvinyl alcohol, diacetone-modified polyvinyl alcohol and acetoacetyl-modified polyvinyl alcohol will be specifically explained.

The sulfo-modified polyvinyl alcohol can be prepared by a method including: copolymerizing an olefinsulfonic acid or a salt thereof such as ethylenesulfonic acid, allylsulfonic acid, methallylsulfonic acid, or the like with a vinylester such as vinyl acetate, or the like in an alcohol or a mixed solvent of an alcohol and water to form a polymer and saponifying the obtained polymer; a method including: copolymerizing an amide sodium salt and a vinyl ester such as vinyl acetate, or the like and saponifying the obtained polymer; a method including: treating PVA with bromine, iodine,

or the like and heating the treated PVA in an acidic aqueous sodium sulfite solution; a method including: heating PVA in a concentrated aqueous sulfuric acid solution; a method including: acetalating PVA with an aldehyde compound including a sulfonic acid group; or the like.

The diacetone-modified polyvinyl alcohol is a partially or completely saponified product of a copolymer of a monomer having a diacetone group and a vinyl ester, and can be prepared by a method including: copolymerizing the monomer having a diacetone group and the vinyl ester to form a resin and saponifying the obtained resin.

The proportion of the monomer having a diacetone group (repeating unit structure) in the diacetone-modified polyvinyl alcohol is not specifically limited.

The acetoacetyl-modified polyvinyl alcohol can be generally prepared by adding liquid or gaseous diketene to a solution, a dispersion liquid or powder of a polyvinyl alcohol resin to cause the diketene to react with the resin. The acetylation degree of the acetoacetyl-modified polyvinyl alcohol can be suitably selected according to the desired quality of an objective heat-sensitive recording material.

-Other components-

The heat-sensitive recording layer used in the invention may include, according to the purpose or need, other components such as a cross-linking agent, any other pigment, a metal soap, wax, a surfactant, a binder, an antistatic agent, a defoaming agent, a fluorescence dye, and the like as well as the above-mentioned components.

[Cross-linking agent]

The heat-sensitive recording layer may include a cross-linking agent that reacts with the specific modified PVA, and/or any other modified PVA used as an adhesive (or a protective colloid) and the like. By incorporating such a cross-linking agent, water resistance of the heat-sensitive recording material can be improved.

The cross-linking agent can be suitably selected from cross-linking agents which can cross-link the specific modified PVA (and preferably the above-mentioned other modified PVA, and the like). Among these, an aldehyde compound such as glyoxal, or the like, a dihydrazide compound such as adipic acid dihydrazide, or the like is specifically preferred.

The content of the cross-linking agent in the heat-sensitive recording layer is preferably 1 to 50 parts by mass, and more preferably 3 to 20 parts by mass relative to 100 parts by mass of the specific modified PVA, other modified PVA and the like to be cross-linked. When the content of the cross-linking agent is in the above-mentioned range, water resistance can be effectively improved.

[Mordant]

The heat-sensitive recording layer may include a mordant for the purpose of preventing bleeding at the time of ink jet recording.

Examples of the mordant include compounds having at least one cationic group selected from an amide group, an imide group, a primary amino group, a secondary amino group, a tertiary amino group, a primary ammonium salt group, a secondary ammonium salt group, a tertiary ammonium salt group and a quatenary ammonium salt group.

Specific examples thereof include polyamide epichlorohydrin, polyvinylbenzyltrimethylammonium chloride, polydiallyldimethylammonium chloride, polymethacryloyloxyethyl-β-hydroxyethyldimethylammonium chloride, polydimethylaminoethylmethacrylate hydrochloride, polyethyleneimine, polyallylamine, polyallylamine hydrochloride, polyamide-polyamine resins, cationated starch, dicyanodiamide-formalin condensates, dimethyl-2-hydroxypropylammonium salt polymers, and the like.

Beside the above-mentioned polymers, a cationic polymer is also preferred. Examples of such a cationic polymer include, for example, polyethyleneimine, polydiallylamine, polyallylamine, polydiallyldimethylammonium chloride, polymethacryloyloxyethyl-β-hydroxyethyldimethylammonium chloride, polyallylamine hydrochloride, polyamide-polyamine resins, cationated starch, dicyanodiamide formalin condensates, dimethyl-2-hydroxypropylammonium salt polymers, polyamidine, polyvinylamine, and the like.

The molecular weight of the mordant is preferably about 1000 to 200000. When the molecular weight is less than 1000, water resistance tends to become insufficient, and, when the molecular weight exceeds 200000, viscosity increases, which sometimes leads to bad handling applicability.

The cationic polymer may be contained in either the heat-sensitive recording layer or the protective layer described later.

[Metal soap, wax and surfactant]

The metal soap can be a higher fatty acid metal salt, and specifically zinc stearate, calcium stearate, aluminum stearate or the like.

Examples of wax include, for example, paraffin wax, microcrystalline wax, carnauba wax, methylolstearoamide, polyethylene wax, polystyrene wax, fatty acid amide wax, and the like. These can be used alone or in combination.

The surfactant can be, for example, an alkali metal salt of a sulfosuccinic acid, a fluorine-containing surfactant, or the like.

[Binder]

The electron-donating colorless dye, the electron-accepting compound, the inorganic pigment, the adhesive and the sensitizer, and other components can be suitably dispersed in a water-soluble binder. The binder used herein is preferably a compound that can be dissolved by not less than 5% by mass in water at 25°C. Specific examples of the binder include polyvinyl alcohol, methylcellulose, carboxymethylcellulose, starchs (including modified starchs), gelatin, gum arabic, casein, a saponified product of a styrene-maleic anhydride copolymer, and the like.

The binder not only functions as a material in which substances are dispersed but also functions to improve film strength of the heat-sensitive recording layer. In order to exhibit such function, a synthetic polymer latex binder such as a styrene-butadiene copolymer, a vinyl acetate copolymer, an acrylonitrile-butadiene copolymer, a methyl acrylate-butadiene copolymer, polyvinylidene chloride, or the like can be used in combination with the above-mentioned binder.

-Others-

The electron-donating colorless dye, the electron-accepting compound, the inorganic pigment, the adhesive and the sensitizer can be simultaneously or separately dispersed with a stirrer or a crusher such as a ball mill, an attritor, a sand mill, or the like and then a coating solution is prepared. If neccesary, the coating solution may include the above-mentioned other components, i.e., a cross-linking agent, a mordant, a metal soap, wax, a surfactant, a binder, an antistatic agent, a defoaming agent, a fluorescence dye and the like.

As mentioned above, the coating solution is prepared and applied onto the surface of a substrate, whereby a heat-sensitive recording layer is formed. The coating method for applying the coating solution is not specifically limited, and may be suitably selected from coating methods using an air knife coater, a roll coater, a blade coater, a curtain coater, or the like. After the application, the resultant coating is dried, and the dried coating is subjected to smoothing treatment, preferably calendar treatment, and the resultant material is used.

The dried coating amount of the coating solution for forming a heat-sensitive recording layer is preferably less than 6 $g/m^2$, more preferably not more than 5 $g/m^2$, and specifically preferably not more than 4 $g/m^2$. In the third aspect, the coating amount (dried mass) is preferably 2 or more $g/m^2$ but less than 7 $g/m^2$. When the coating amount of the coating solution is less than 6 $g/cm^2$, a thin heat-sensitive recording layer is formed, and burden of drying is light and paper-like feeling can be provided without deterioration of whiteness degree of a background portion and image storability.

In the invention, a curtain coating method using a curtain coater is specifically preferred. The reasons for this are as follows. The components can be concentrated on a recording surface. Moreover, high density (high sensitivity) can be obtained even when smaller amounts of materials are used. Furthermore, image quality can be simultaneously improved. When a layer or layers other than a heat-sensitive recording layer, such a protecitve layer, are laminated as mentioned later, the amount of energy consumed during preparation can be further decreased by simultaneously applying multiple layers by a curtain coating method. A specific example of such a method is as follows.

The heat-sensitive recording material is preferably prepared by applying at least one coating solution onto the surface of a substrate by a curtain coating method to form a part or whole of one or more layers to be provided on the substrate and drying the formed layer(s). The layers formed by a curtain coating method are not specifically limited, and specific examples thereof include a primer layer, a heat-sensitive recording layer, a protective layer, and the like. In a preferred embodiment, a series of layers which adjoin each other are simultaneously applied by a curtain coating method.

Specific examples of combinations of layers to be simultaneously applied include, but are not limited to, a combination of a primer layer and a heat-sensitive recording layer, a combination of a heat-sensitive recording layer and a protective layer, a combination of a primer layer, a heat-sensitive recording layer and a protective layer, a combination of two or more of different kinds of primer layers, a combination of two or more of different kinds of heat-sensitive recording layers, a combination of two or more of different kinds of protective layers, and the like.

Examples of a curtain coating apparatus used in a curtain coating method include, but are not limited to, an

extrusion hopper type curtain coating apparatus, a slide hopper type curtain coating apparatus, and the like. Among these, a slide hopper type curtain coating apparatus described in Japanese Patent Application Publication (JP-B) No. 49-24133, which is used in preparation of photographic photosensitive materials, is specifically preferred. By using the slide hopper type curtain coating apparatus, it is easy to simultaneously apply a plurality of layers.

In the first aspect of the invention, the density of an image portion formed by heat printing that has been irradiated with a fluorescent lamp at 500,000 Lux·h is retained at a rate of not less than 80% relative to that of the image portion before irradiation (The density retention rate (light fastness) after the irradiation is not less than 80%). The density retention rate means a ratio of the density $D^2$ of an image portion after irradiation relative to the density $D^1$ of the image portion prior to the irradiation ($D^2/D^1 \times 100$). Each density can be measured with a Macbeth reflection densitometer (trade name: RD-918, manufactured by Macbeth Corporation), or the like.

When the density retention rate is less than 80%, light fastness is insufficient, and the printing density decreases during storage after printing, and the commercial value of the material decreases. The rate is desirably not less than 90%.

Specifically, the image retention rate can be adjusted at a value of not less than 80% by incorporating an image stabilizer (specifically an ultraviolet light absorbent) in a heat-sensitive recording layer or a protective layer, by suitably selecting the kinds and formulations of an electron-donating colorless dye and an electron-accepting compound, and/or by microencapsulating a color development component according to preferable embodiments.

In the second aspect, the whiteness degree of a non-image portion of a heat-sensitive recording layer measured according to JIS P81230 (1961) is 75% to 90%. When the whiteness degree is less than 75%, the recording surface looks dull, which leads to decreased sharpness of the formed image. On the other hand, when the whiteness degree exceeds 90%, this results in high cost and therefore is not practical.

Specifically, the whiteness degree can be adjusted at a value in the range of 75 to 90% by incorporating the electron-accepting compound represented by general formula (1), and by suitably selecting particle sizes, kinds and amounts of the electron-accepting compound and the electron-donating colorless dye, presence or absence of a protective layer, and the like according to preferred embodiments. The whiteness degree is more preferably in the range of 80 to 90%.

Specifically, a level of density of an image portion, which has been retained under environmental conditions of 40°C and relative humidity of 90% for 24 hours after printing, is not more than 50% lower than that of the image portion before retention (The rate of decrease in the density of an image portion after the retention is not more than 50%)(i.e., improvement in moisture resistance). The kinds of the electron-accepting compound and an electron-donating dye precursor specifically contribute to improvement in moisture resistance. The improvement can be achieved by using compounds specifically defined in the invention (using preferable compounds of the electron-accepting compound represented by general formula (1), the inorganic pigment, the adhesive, the sensitizer and the electron-donating dye precursor).

The rate of decrease in density can be calculated as follows. Given that the image density of an image portion before retention $D^1$ is 100, the rate of decrease in density is obtaind by subtracting from 100 the ratio of the image density of the image portion after retention $D^2$ to the density $D^1$ ($D^2/D^1 \times 100$). Each of the densities can be measured by a Macbeth reflection densitometer (trade name: RD-918, manufactured by Macbeth Corporation), or the like.

The rate of decrease under the above-mentioned environment conditions is more preferably not more than 30%.

In the third and fourth aspects of the invention, the image density when the heat-sensitive recording material has been thermally printed by applying energy of 15.2 $mJ/mm^2$ to the material is preferably not less than 1.20, and more preferably 1.25 to 1.35. The image density when the heat-sensitive recording material has been thermally printed by applying the above-mentioned energy can be adjusted at a value of not less than 1.20 by suitably selecting the above-mentioned components, layer configuration, a coating method, or the like, specifically by selecting particle sizes, kinds and amounts of the electron-accepting compound, the electron-donating colorless dye, the adhesive and the sensitizer, presence or absence of a protective layer, and the like, according to preferred embodiments.

<Protective layer>

At least one protective layer is preferably disposed on the heat-sensitive recording layer. The protective layer may include organic or inorganic micropowder, a binder, a surfactant, a heat-melting substance, and the like.

Examples of the micropowder include, for example, inorganic micropowder such as calcium carbonate, silicas, zinc oxide, titanium oxide, aluminum hydroxide, zinc hydroxide, barium sulfate, kaolin, clay, talc, surface-treated calcium and silica, and the like, and organic micropowder such as a urea-formalin resin, a styrene/methacrylic acid copolymer, polystyrene, and the like.

Examples of the binder to be included in the protective layer include, for example, polyvinyl alcohol, carboxy-modified polyvinyl alcohol, a vinyl acetate-acrylamide copolymer, silicon-modified polyvinylalcohol, starch, modified

starch, methylcellulose, carboxymethylcellulose, hydroxymethylcellulose, gelatins, gum arabic, casein, a styrene-maleic acid copolymer hydrolysate, polyacrylamide derivatives and polyvinylpyrrolidone, and latexes such as a styrene-butadiene rubber latex, an acrylonitrile-butadiene rubber latex, a methyl acrylate-butadiene rubber latex, a vinyl acetate emulsion, and the like.

In a preferred embodiment, the protective layer may contain a waterproofing agent for cross-linking a binder component in the protective layer to further improve storage stability of the heat-sensitive recording material. Examples of the waterproofing agent include, for example, N-methylolurea, N-methylolmelamine, water-soluble initial condensates such as urea-formalin, and the like, dialdehyde compounds such as glyoxal, glutalaldehyde, and the like, inorganic cross-linking agents such as boric acid, borax, colloidal silica, and the like, polyamide epichlorohydrin, and the like.

In a specifically preferred embodiment, the protective layer includes at least one inorganic pigment selected from aluminum hydroxide, kaolin and amorphous silica, and a water-soluble polymer. Such an embodiment can have improved storability due to the oil-absorbing property of the inorganic pigment, or the like, and can have handling property and stamping applicability (plain paper-like feeling). In addition, the protective layer may also include a surfactant, a heat-melting substance, and the like.

The volume mean diameter of the inorganic pigment to be included in the protective layer is preferably 0.5 to 3 μm, and more preferably 0.7 to 2.5 μm. Specifically, aluminum hydroxide having a volume mean diameter of 0.5 to 1.2 μm is preferred in view of improvement in stamping applicability, and amorphous silica is preferred in view of improvement in ink jet applicability. The volume mean diameter can be measured in the same manner as the method for measuring the volume mean diameter of the electron-donating colorless dye, or the like.

The total content of the inorganic pigment selected from aluminum hydroxide, kaolin and amorphous silica is preferably 10 to 90% by mass, and more preferably 30 to 70% by mass relative to the total solid content (mass) of the coating solution for forming a protective layer. Furthermore, any other pigment such as barium sulfate, zinc sulfate, talc, clay, colloidal silica, or the like can be used in combination with aluminum hydroxide, kaolin, or amorphous silica, so long as the effects of the invention (specifically improvement in storability, and provision of a handling property and stamping applicability) are not deteriorated.

Examples of the water-soluble polymer include, among the above-mentioned binders, polyvinyl alcohol and modified polyvinyl alcohols (hereinafter generally referred to as "polyvinyl alcohol"), starch, modified starch such as oxidized starch, urea phosphate esterified starch, and the like, carboxyl group-containing polymers such as a styrene-maleic anhydride copolymer, an alkyl esterified product of a styrene-maleic anhydride copolymer, a styrene-acrylic acid copolymer, and the like. Among these, polyvinyl alcohol, oxidized starch, urea phosphate esterified starch are preferred in view of stamping applicability, and a mixture of polyvinyl alcohol (x) and oxidized starch and/or urea phosphate esterified starch (y) at a mass ratio (x/y) of 90/10 to 10/90 is specifically preferred. Specifically, when polyvinyl alcohol, oxidized starch and urea phosphate esterified starch are used in combination, the mass ratio ($y^1/y^2$) of oxidized starch ($y^1$) and urea phosphate esterified starch ($y^2$) is preferably 10/90 to 90/10.

The modified polyvinyl alcohol is preferably acetoacetyl-modified polyvinyl alcohol, diacetone-modified polyvinyl alcohol, silicon-modified polyvinyl alcohol and amide-modified polyvinyl alcohol. In addition, sulfo-modified polyvinyl alcohol, carboxy-modified polyvinyl alcohol, and the like are also used.

Furthermore, use of a cross-linking agent that reacts with polyvinyl alcohol can further improve storability, a handling property and stamping applicability.

The rate of the water-soluble polymer is preferably 10 to 90% by mass, and more preferably 30 to 70% by mass relative to the total solid content (mass) of a coating solution for forming a protective layer.

Preferable examples of the cross-linking agent for cross-linking the water-soluble polymer include polyvalent amine compounds such as ethylenediamine, and the like, polyvalent aldehyde compounds such as glyoxal, glutalaldehyde, dialdehyde, and the like, dihydrazide compounds such as adipic acid dihydrazide, phthalic acid dihydrazide, and the like, water-soluble methylol compounds (urea, melamine and phenol), multifunctional epoxy compounds, polyvalent metal salts (Al, Ti, Zr, Mg, and the like), and the like. Among these, polyvalent aldehyde compounds, and dihydrazide compounds are preferred.

The content of the cross-linking agent is preferably about 2 to 30% by mass, and more preferably 5 to 20% by mass relative to the mass of the water-soluble polymer. By incorporating the cross-linking agent, film strength, water resistance, and the like can be further improved.

The mixing ratio of the inorganic pigment selected from aluminum hydroxide, kaolin and amorphous silica and the water-soluble polymer in the protective layer depends on the kind and the particle size of the inorganic pigment, the kind of the water-soluble polymer, and the like, and the amount of the water-soluble polymer is preferably 50 to 400% by mass, and more preferably 100 to 250% by mass relative to the mass of the inorganic pigment.

The total mass of the inorganic pigment and the water-soluble polymer in the protective layer is preferably not less than 50% by mass of the total solid mass of the protective layer.

In a preferred embodiment, the protective layer, i.e., a coating solution for forming a protective layer (hereinafter sometimes referred to as "coating solution for a protective layer") may contain a surfactant in view of improvement in ink jet ink applicability.

Preferable examples of the surfactant include alkylbenzenesulfonates such as sodium dodecylbenzenesulfonate, and the like, alkyl sulfosuccinates such as sodium dioctylsulfosuccinate, and the like, polyoxyethylene alkyl ether phosphates, sodium hexametaphosphate, perfluoroalkylcarboxylates, and the like. Among these, alkyl sulfosuccinates are more preferred.

The content of the surfactant is preferably 0.1 to 5% by mass, and more preferably 0.5 to 3% by mass relative to the total solid mass of the coating solution for forming a protective layer.

The coating solution for a protective layer can be prepared by dissolving or dispersing the inorganic pigment selected from aluminum hydroxide, kaolin and amorphous silica, and water-soluble polymer, and if required, a cross-linking agent, a surfactant, and the like in a desired water-based solvent. The coating solution may include a lubricant, a defoaming agent, a fluorescent brightening agent, a colored organic pigment, and the like, so long as the effects of the invention (specifically improvement in storability and provision of a handling property and stamping applicability) are not deteriorated.

Examples of the lubricant include, for example, metal soaps such as zinc stearate, calcium stearate, and the like, wax such as paraffin wax, microcrystalline wax, carnauba wax, and synthetic polymer wax, and the like.

-Substrate-

Conventionally known substrates can be applied to the substrate. Specific examples tehreof include paper substrates such as woodfree paper, and the like, coated paper in which paper is coated with a resin or a pigment, paper on which a resin layer is laminated, woodfree paper having a primer layer, synthetic paper, plastic films, and the like. A substrate including recycled pulp as a main component, i.e. a substrate in which the mass of recycled pulp is 50% by mass of the components of the substrate can be also used. When recycled pulp is used in the substrate, recycling and saving of resources can be realized.

The substrate is preferably a smooth substrate having smoothness defined by JIS-P8119 in the range of 300 seconds to 500 seconds in view of dot reproducibility. Furthermore, for the same reason, the smoothness of the substrate defined by JIS-P8119 is more preferably not less than 100 seconds, and still more preferably not less than 150 seconds.

The recycled pulp is made by the combination of the following three steps 1) to 3).

1) Maceration treating recycled paper with mechanical force and a chemical agent using a pulper to form fibers, and separating printing ink from the fibers.
2) Dust removal removing foreign substances (plastic, and the like) and dusts contained in the recycled paper.
3) Deinking removing the printing ink which has been separated from the fibers out of the system by a floatation method or a washing method.

If desired, bleaching can be carried out simultaneously with deinking or in another step.

A substrate for a heat-sensitive recording material is made of the thus-obtained recycled pulp (100% by mass) or a mixture of recycled pulp and virgin pulp (the content of the virgin pulp is less than 50% by mass) by a conventional method.

A primer layer may be disposed on the substrate. In this case, the primer layer is preferably provided on a surface of a substrate having a Stockigt size of not less than 5 seconds, and the primer layer is preferably mainly made of a pigment and a binder.

As the pigment in the primer layer, all of general inorganic and organic pigments can be used, and an oil-absorbing pigment having an oil absorbency defined by JIS-K5101 of not less than 40 ml/100 g (cc/100 g) is specifically preferred. Specific examples of the oil-absorbing pigment include calcined kaolin, aluminum oxide, magnesium carbonate, calcined diatomaceous earth, aluminum silicate, magnesium aluminosilicate, calcium carbonate, barium sulfate, aluminum hydroxide, kaolin, calcined kaolin, amorphous silica, urea-formalin resin powder, and the like. Among these, calcined kaolin having an oil absorbency of 70 ml/100 g to 80 ml/100 g is specifically preferred.

The coating amount of the pigment during application and formation of a primer layer on a substrate is preferably not less than 2 g/$m^2$, more preferably not less than 4 g/$m^2$, and specifically preferably 7 to 12 g/$m^2$.

Examples of the binder of the primer layer include water-soluble polymers and aqueous binders. These may be used alone or in combination.

Examples of the water-soluble polymer include, for example, starch, polyvinyl alcohol, polyacrylamide, carboxymethylcellulose, methylcellulose, casein, and the like. The aqueous binder is generally a synthetic rubber latex or a synthetic resine emulsion, and examples thereof include, for example, a styrene-butadiene rubber latex, an acrylonitrile-butadiene rubber latex, a methyl acrylate-butadiene rubber latex, a vinyl acetate emulsion, and the like.

The amount of the binder used in the primer layer is determined in accordance with the film strength, the heat sensitivity of a heat-sensitive-color developing layer, or the like, and is preferably 3 to 100% by mass, more preferably 5 to 50% by mass, and specifically preferably 8 to 15% by mass relative to the mass of the pigment in the primer layer. The primer layer may include wax, a color fading preventing agent, a surfactant, and the like.
A coating solution for forming a primer layer can be applied according to a known coating method. Specific examples of such a method include coating methods using an air knife coater, a roll coater, a blade coater, a gravure coater, a curtain coater, or the like. Among these, a coating method using a curtain coater or a blade coater is preferable, and a coating method using a blade coater is more preferable. After application and drying, the primer layer may be subjected to smoothing treatment such as calendaring, and the like, if necessary.
The method using the blade coater is not limited to coating methods using a bevel type blade or a bent type blade, and examples of the method include a coating method using a rod blade, a coating method using a bill blade, and the like. Furthermore, the coating method is not limited to methods using an off-machine coater, and coating can be carried out using an on-machine coater provided on a paper machine. In addition, in order to obtain superior smoothness and surface state by providing flowability to a primer layer during blade coating, the coating solution for forming a primer layer (a coating solution for an undercoat layer) may include carboxymethylcellulose having an etherification degree of 0.6 to 0.8 and an weight average molecular weight of 20000 to 200000 in an amount of 1 to 5% by mass, and preferably 1 to 3% by mass relative to the amount of the pigment.
The coating amount of the primer layer is not specifically limited, and is preferably not less than 2 $g/m^2$, more preferably not less than 4 $g/m^2$, and specifically preferably not less than 7 to 12 $g/m^2$ in accordance with characteristics of the heat-sensitive recording material.
In the invention, primer base paper having a primer layer (specifically preferably a primer layer having a high oil-absorbing property, a high adiabatic effect and high flatness) is preferred, and primer base paper having a primer layer which includes an oil-absorbing pigment and which has been made using a blade coater is specifically preferred in view of improvement in a head matching property with respect to a thermal head and improvements in sensitivity and image quality.
The total ion concentration of $Na^+$ ions and $K^+$ ions included in the heat-sensitive recording material is preferably not more than 1500 ppm, more preferably not more than 1000 ppm, and specifically preferably not more than 800 ppm in view of prevention of head corrosion of a thermal head to be brought into contact with the heat-sensitive recording material. As a result of selecting and using materials having a low ion content, the total ion concentration in the whole of the heat-sensitive recording material including the substrate, layers, and the like can be suppressed and the amount of ions adhered to a head can be suppressed, which can lead to improvement in an anticorrosion property (durability) of the thermal head.
The ion concentration of $Na^+$ ions and $K^+$ ions can be measured by extracting these ions in a heat-sensitive recording material with hot water and measuring the mass of $Na^+$ ions and $K^+$ ions in the hot water by an ion quantitative analysis method using an atomic absorption method. The total ion concentration is represented by ppm relative to the total mass of the heat-sensitive recording material.
In the heat-sensitive recording material of the invention, wettablity of the surface of the heat-sensitive recording layer, i.e., the contact angle of a droplet of distilled water when 0.1 seconds have lapsed since dripping of the droplet on the surface of the heat-sensitive recording layer is preferably not less than 20°, and more preferably not less than 50°. By adjusting the contact angle in the above-mentioned range, bleeding of ink at the time of printing with an ink jet printer or at the time of stamping can be effectively prevented (provision of or improvement in ink jet applicability), by which improvement in stamping applicability can be achieved.
The contact angle in the above-mentioned range can be obtained by incorporating an electron-accepting compound represented by general formula (1) (preferably 4-hydroxybenzenesulfonanilide) into the heat-sensitive recording material. Alternatively, a method including: adding at least one of materials capable of keeping the contact angle of distilled water on the recording surface high, such as a sensitizer and paraffin wax according to the invention, to the heat-sensitive recording layer is also preferable.
The contact angle can be measured by dripping distilled water on the surface (recording surface) of the heat-sensitive recording layer of a heat-sensitive recording material and measuring the contact angle when 0.1 seconds have lapsed since the dripping by a conventional method. For example, the contact angle can be measured with a dynamic contact angle absorption tester such as FIBRO system (trade name: DAT1100, manufactured by FIBRO system, ab), or the like.
The heat-sensitive recording material of the invention is useful in view of superior image storability, and a level of density of a formed image, which has been left under environmental conditions of a temperature of 60°C and a relative humidity of 20% for 24 hours, is retained at a rate of not less than 65% relative to that of the formed image before leaving (The density retention rate after the leaving is not less than 65%). As mentioned above, by incorporating the electron-accepting compound represented by general formula (1) (specifically preferably 4-hydroxybenzenesulfoneanilide), and, in a preferred embodiment, further incorporating an image stabilizer, or the like, the density retention

rate can be adjusted in the above-mentioned range. Accordingly, the formed image can be maintained at a high density for a long period of time, and the heat-sensitive recording material can be applied to fields in which image reliability is required for a long period of time such as fields of storage of important documents, advance tickets, receipts, cash vouchers, and the like.

The density retention rate of an image is represented, as shown in the following equation, by the ratio (%) of the density of an image which has been printed and has been left under the atmosphere of a temperature of 60°C and a relative humidity of 20% for 24 hours after the printing, to the density of an image immedeately after the image has been printed in the same manner as the printing method of the image that has been left. The densities are measured with a Macbeth reflection densitometer (e.g., RD-918).

$$\text{Density retention rate} = [(\text{Image density after leaving})/(\text{Image density immediately after printing})] \times 100$$

In the third aspect of the heat-sensitive recording material of the invention, a level of density of a formed image, which has been left under environmental conditions of a temperature of 70°C and a relative humidity of 30% for 24 hours after printing, is not more than 50% lower than that of the formed image before leaving (The rate of decrease in density after the leaving (hereinafter sometimes referred to "heat resistance of an image") is not more than 50%). Thereby, it is unlikely that fogging occurs, and a printed image does not easily fade out. The heat resistance of an image is preferably not more than 40%, and more preferably not more than 30%. When the heat resistance of an image exceeds 50%, the influence of heat cannot be sufficiently suppressed and it is impossible to keep the density of a formed image at high level for a long period of time. Accordingly, for example, the density of a formed image decreases over time. When a barcode is recorded on the recording material, the barcode cannot be read with an apparatus.

The heat resistance of an image is calculated by, as shown in the following equation, the ratio (%) of the difference between the density of an image measured by Macbeth reflection densitometer (e.g., RD-918) immediately after printing of the image and the density of an image which has been printed in the same manner as the printing method of the above image and thereafter has been left under the atmosphere of a temperature of 70°C and a relative humidity of 30% for 24 hours, to the above-mentioned density of the image measured immediately after the printing of the image.

$$\text{Heat resistance of image (Rate of decrease in density)}=\{[(\text{Image density immediately after printing})-(\text{Image density after leaving})]/(\text{Image density immediately after printing})\} \times 100$$

The heat resistance of an image can be adjusted at high level by combining the electron-accepting compound represented by general formula (1) with a specific sensitizer and/or an electron-donating dye precursor and an image stabilizer. Furthermore, the heat resistance of an image can be adjusted by providing an overcoat layer (a protective layer) on the heat-sensitive recording material of the invention.

Furthermore, the image density after a heat source has been brought into contact with the heat-sensitive recording material at 70°C for 5 seconds (reflection density measured by a Macbeth reflection densitometer (trade name: RD-918, manufactured by Macbeth Corporation)) is not more than 0.15. When the image density after a heat source has been brought into contact with the heat-sensitive recording material at 70°C for 5 seconds is more than 0.15, background is colored by being left under a high temperature, e.g., in summer or the like, for a long period of time. Then, the commercial value of the material decreases.

In the fourth aspect of the invention, a level of density of a formed image, which has been left under environmental conditions of a temperature of 40°C and a relative humidity of 90% for 24 hours after printing, is not more than 50% lower than that of the formed image before leaving (The rate of decrease in density after the leaving (hereinafter sometimes referred to as "moisture resistance of an image") is not more than 50%). The moisture resistance of an image is preferably not more than 40%, and more preferably not more than 20%. When the moisture resistance of an image exceeds 50%, the influence of moisture cannot be sufficiently suppressed, and it is impossible to keep the density of a formed image at high level for a long period of time. Accordingly, for example, the density of the formed image decreases over time. When a barcode is recorded on the recording material, the barcode cannot be read with an apparatus.

The moisture resistance of an image is represented by, as shown in the following equation, the ratio (%) of the difference between the density of an image measured by Macbeth reflection densitometer (e.g., RD-918) immediately after printing of the image and the density of an image which has been printed in the same manner as the printing method of the above image and thereafter has been left under the atmosphere of a temperature of 40°C and a relative humidity of 90% for 24 hours, to the above-mentioned density of the image measured immediately after the printing of the image.

Moisture resistance of image (Density retention rate)={[(Image density immediately after printing)-(Image density after leaving)]/(Image density immediately after printing)} × 100

The moisture resistance of an image can be adjusted at a high level by combining the electron-accepting compound represented by general formula (1) with a specific sensitizer and/or an electron-donating dye precursor, and an image stabilizer. Furthermore, the moisture resistance of an image can be adjusted by providing an overcoat layer (a protective layer) on the heat-sensitive recording material of the invention.

EXAMPLES

Hereinafter the invention will be explained with referring Examples. However, the invention is not limited to these Examples. "Parts" and "%" used in Examples mean "parts by mass" and "% by mass", respectively.

Example 1

<Preparation of coating solution for heat-sensitive recording layer>

-Preparation of dispersion liquid A-1 (containing electron-donating colorless dye)-

The following components were mixed with a ball mill to prepare dispersion liquid A-1 having a volume mean diameter of 0.7 μm. The volume mean diameter was measured with a laser diffraction type size distribution measuring instrument (trade name: LA500, manufactured by Horiba, Inc.).

[Composition of dispersion liquid A-1]

- 2-Anilino-3-methyl-6-diethylaminofluorane 10 parts
  (an electron-donating colorless dye)
- 2.5% Polyvinyl alcohol solution 50 parts
  (trade name: PVA-105, manufactured by Kuraray Co., Ltd.)

-Preparation of dispersion liquid B-1 (containing electron-accepting compound)-

The following components were mixed with a ball mill to prepare dispersion liquid B-1 having a volume mean diameter of 0.7 μm. The volume mean diameter was measured in the same manner as the method for measuring the volume mean diameter of dispersion liquid A-1.

(Composition of dispersion liquid B-1)

- 4-Hydroxybenzenesulfoneanilide 20 parts
  (an electron-accepting compound represented by general formula (1))
- 2.5 % Polyvinyl alcohol solution 100 parts
  (trade name: PVA-105, manufactured by Kuraray Co., Ltd.)

-Preparation of dispersion liquid C-1 (containing a sensitizer)-

The following components were mixed with a ball mill to prepare dispersion liquid C-1 having a volume mean diameter of 0.7 μm. The volume mean diameter was measured in the same manner as the method for measuring the volume mean diameter of dispersion liquid A-1.

(Composition of dispersion liquid C-1)

- 2-Benzyloxynaphthalene (a sensitizer) 20 parts
- 2.5% Polyvinyl alcohol solution 100 parts
  (trade name: PVA-105, manufactured by Kuraray Co., Ltd.)

-Preparation of dispersion liquid D-1 (containing pigment)-

The following components were mixed with a sand mill to prepare dispersion liquid D-1 having a volume mean diameter of 2.0 μm. The volume mean diameter was measured in the same manner as the method for measuring the volume mean diameter of dispersion liquid A-1.

(Composition of dispersion liquid D-1)

- Calcite light calcium carbonate 40 parts
  (trade name: UNIVER 70, manufactured by Shiraishi Kogyo K.K.)
- Sodium polyacrylate 1 part
- Water 60 parts

-Preparation of coating solution for heat-sensitive recording layer-

The following components were mixed to prepare a coating solution for a heat-sensitive recording layer.

(Composition of coating solution for heat-sensitive recording layer)

- Dispersion liquid A-1 60 parts
- Dispersion liquid B-1 120 parts
- Dispersion liquid C-1 120 parts
- Dispersion liquid D-1 101 parts
- 30% Zinc stearate dispersion liquid 15 parts
- Paraffin wax (30%) 20 parts
- Sodium dodecylbenzenesulfonate (25%) 3 parts

<Preparation of coating solution for undercoat layer of substrate>

The following components were mixed and stirred with a dissolver to prepare a dispersion liquid.

- Calcined kaolin (oil-absorption amount: 75 ml/100 g) 100 parts
- Sodium hexametaphosphate 1 part
- Water 110 parts

Twenty parts of SBR (styrene-butadiene rubber latex) and 25 parts of oxidized starch (25%) were then added to the obtained dispersion liquid to prepare a coating solution for an undercoat layer of a substrate.

<Preparation of heat-sensitive recording material>

Woodfree paper having smoothness measured by JIS-P8119 of 150 seconds was prepared as a substrate. The coating solution for an undercoat layer of a substrate obtained above was applied to the surface of the woodfree paper by a blade coater so that the coating amount after drying became 8 g/m$^2$. Thus, an undercoat layer was formed. By applying the undercoat layer, the smoothness measured by JIS-P8119 of the substrate became 350 seconds.
The coating solution for a heat-sensitive recording layer obtained above was then applied to the undercoat layer with a curtain coater so that the coating amount after drying became 4 g/m$^2$. The resultant coating was dried and a heat-sensitive recording layer was thus obtained. The surface of the thus-formed heat-sensitive recording layer was then subjected to calendaring treatment and a heat-sensitive recording material of the invention (1) was obtained.
The color development density of the obtained heat-sensitive recording material (1) (measured by Macbeth reflection densitometer RD-918) at an energy, applied to a thermal head, of 15.2 mJ/mm$^2$, which was measured according to the same conditions and method as those in evaluations described later, was 1.28.

Example 2

-Preparation of dispersion liquid E-1 -

The following components were mixed with a ball mill to prepare dispersion liquid E-1 having a volume mean diameter of 0.7 μm. The volume mean diameter was measured in the same manner as in Example 1.

(Composition of dispersion liquid E-1)

- 1,1,3-Tris(2-methyl-4-hydroxy-5-tert-butylphenyl)butane (an image stabilizer) 5 parts
- 2.5% Polyvinyl alcohol solution 25 parts
  (trade name: PVA-105, manufactured by Kuraray Co., Ltd.; an adhesive)

-Preparation of coating solution for heat-sensitive recording layer-

Dispersion liquids A-1, B-1, C-1 and D-1 were prepared in the same manner as in Example 1 and mixed with dispersion liquid E-1 obtained above in accordance with the following composition to prepare a coating solution for a heat-sensitive recording layer. Furthermore, the heat-sensitive recording material of the invention (2) was obtained in the same manner as in Example 1.

(Composition of coating solution for heat-sensitive-color develop layer)

- Dispersion liquid A-1 60 parts
- Dispersion liquid B-1 120 parts
- Dispersion liquid C-1 120 parts
- Dispersion liquid E-1 30 parts
- Dispersion liquid D-1 101 parts
- 30% Zinc stearate dispersion liquid 15 parts
- Paraffin wax (30%) 20 parts
- Sodium dodecylbenzenesulfonate (25%) 3 parts

Example 3

Dispersion liquid E-1' was prepared in the same manner as in Example 2 except that 1,1,3-tris(2-methyl-4-hydroxy-5-cyclohexylphenyl) butane was used instead of 1,1,3-tris(2-methyl-4-hydroxy-5-tert-butylphenyl)butane (an image stabilizer) used in the preparation of dispersion liquid E-1. Furthermore, the heat-sensitive recording material of the invention (3) was obtained in the same manner as in Example 2.

Examples 4 and 5

The heat-sensitive recording materials of the invention (4) and (5) were obtained in the same manner as in Example 1 except that 20 parts of amorphous silica (trade name: MIZUKASIL P832, manufactured by Mizusawa Industrial Chemicals, Ltd.) and 40 parts of aluminum hydroxide (trade name: HYGILITE H42, manufactured by Showa Denko K.K.) were used, respectively, instead of 40 parts of calcite light calcium carbonate (UNIVER 70; inorganic pigment) used in the preparation of dispersion liquid D-1.

Example 6

The heat-sensitive recording material of the invention (6) was obtained in the same manner as in Example 1 except that a 2.5% sulfo-modified polyvinyl alcohol (trade name: GOHSERAN L3266, manufactured by Nippon Synthetic Chemical Industry Co., Ltd.) aqueous solution was used instead of a 2.5% polyvinyl alcohol aqueous solution (an adhesive) used in the preparations of dispersion liquids A-1, B-1 and C-1.

Example 7

The heat-sensitive recording material of the invention (7) was obtained in the same manner as in Example 1 except that a 2.5% polyvinyl alcohol aqueous solution (an adhesive) used in the preparations of dispersion liquids A-1, B-1 and C-1 was changed to a 2.5% diacetone-modified polyvinyl alcohol (trade name: D500, manufactured by Unitika Ltd.) aqueous solution to prepare dispersion liquids A-1', B-1' and C-1', and that 13 parts of a 5% adipic acid dihydrazide aqueous solution (a crosslinking agent) was added to the coating solution for a heat-sensitive recording layer obtained by mixing the thus-obtained dispersion liquids A-1', B-1' and C-1'.

Example 8

The heat-sensitive recording material of the invention (8) was obtained in the same manner as in Example 1 except that a 2.5% polyvinyl alcohol aqueous solution (an adhesive) used in the preparations of dispersion liquids A-1, B-1 and C-1 was changed to a 2.5% acetoacetyl-modified polyvinyl alcohol (trade name: GOHSEFIMER Z210, manufactured by Nippon Synthetic Chemical Industry Co., Ltd.) aqueous solution to prepare dispersion liquids A-1", B-1" and C-1", and that 13 parts of a 5% glyoxal aqueous solution (a crosslinking agent) was added to the coating solution for a heat-sensitive recording layer obtained by mixing the thus-obtained dispersion liquids A-1", B-1" and C-1".

Example 9

The heat-sensitive recording material of the invention (9) was obtained in the same manner as in Example 1 except that recycled paper (50 g/$m^2$) made of recycled pulp (70%) and LBKP (30%) and having smoothness measured by JIS-P8119 of 170 seconds was used instead of woodfree paper used as the substrate in Example 1.

Example 10

The heat-sensitive recording material of the invention (10) was obtained in the same manner as in Example 1 except that, after formation of an undercoat layer on a substrate, the coating solution for a heat-sensitive recording layer obtained in Example 1 and the following coating solution for a protective layer were applied simultaneously with a curtain coater and the resultant coatings were dried to form multiple layers and the surface of the laminated protective layer was subjected to calendaring treatment instead of applying the coating solution for a heat-sensitive recording layer, drying and calendaring the resultant coating after formation of an undercoat layer on a substrate in the <Preparation of heat-sensitive recording material> of Example 1. The dried coating amount of the protective layer was 2.0 g/$m^2$.

-Preparation of coating solution for protective layer-

The following components were stirred with a sand mill to prepare a pigment dispersion having a volume mean diameter of 2 μm. The volume mean diameter was measured in the same manner as in Example 1.

- Aluminum hydroxide (average particle size: 1 μm) 40 parts
  (trade name: HYGILITE H42, manufactured by Showa Denko K.K.)
- Sodium polyacrylate 1 part

- Water 60 parts

A mixture of 200 parts of a 15% urea phosphate esterified starch aqueous solution (trade name: MS4600, manufactured by Nihon Shokuhin Kako Co., Ltd.), 200 parts of a 15% polyvinyl alcohol aqueous solution (trade name: PVA-105, manufactured by Kuraray Co., Ltd.) and 60 parts of water was separately prepared. The pigment dispersion obtained above, and 25 parts of a zinc stearate emulsified dispersion having a volume mean diameter of 0.15 µm (trade name: HYDRIN F115, manufactured by Chukyo Yushi Co., Ltd.) and 125 parts of a 2% 2-ethylhexyl sodium sulfosuccinate aqueous solution were added to the mixture to form a coating solution for a protective layer.

Examples 11 to 13

The heat-sensitive recording materials of the invention (11) to (13) were obtained in the same manner as in Example 10 except that 40 parts of aluminum hydroxide (trade name: HYGILITE H43; volume mean diameter: 0.7 µm; manufactured by Showa Denko K.K.), 40 parts of kaolin (trade name: KAOBRITE; volume mean diameter: 2.5 µm; manufactured by Shiraishi Kogyo K.K.) and 20 parts of amorphous silica (trade name: MIZUKASIL P707; volume mean diameter: 2.2 µm; manufactured by Mizusawa Industrial Chemicals, Ltd.) were used, respectively, instead of 40 parts of aluminum hydroxide (HYGILITE H42; an inorganic pigment) used in the preparation of the coating solution for a protective layer in Example 10.

Examples 14 to 20

The heat-sensitive recording materials of the invention (14) to (20) were obtained in the same manner as in Example 1 except that dimethylbenzyl oxalate (trade name: HS3520R-N, manufactured by Dainippon Ink and Chemicals, Inc.), m-terphenyl, ethylene glycol tolyl ether, p-benzylbiphenyl, 1,2-diphenoxymethylbenzene, diphenylsulfone and 1,2-diphenoxyethane were used, respectively, instead of 2-benzyloxynaphthalene (a sensitizer) used in the preparation of dispersion liquid C-1 in Example 1.

Examples 21 to 25

The heat-sensitive recording materials of the invention (21) to (25) were obtained in the same manner as in Example 1 except that 2-anilino-3-methyl-6-dibutylaminofluorane, 2-anilino-3-methyl-6-(N-ethyl-N-isoamylamino) fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorine were used, respectively, instead of 2-anilino-3-methyl-6-diethylaminofluorane (an electron-donating colorless dye) used in the preparation of dispersion liquid A-1 in Example 1.

Example 26

The heat-sensitive recording material of the invention (26) was obtained in the same manner as in Example 1 except that an air knife coater was used instead of the curtain coater used in the application of the coating solution for a heat-sensitive recording layer in Example 1.

Examples 27 to 29

The heat-sensitive recording materials of the invention (27) to (29) were obtained in the same manner as in Example 1 except that N-benzyl-4-hydroxybenzenesulfoneamide (= p-N-benzylsulfamoylphenol), BTUM and 4-hydroxy-4'-isopropoxydiphenylsulfone were used, respectively, instead of 4-hydroxybenzenesulfoneanilide (an electron-accepting compound) used in the preparation of dispersion liquid B-1 in Example 1.

Comparative Examples 1 and 2

The comparative heat-sensitive recording materials (30) and (31) were obtained in the same manner as in Example 1 except that 2,2'-bis(4-hydroxyphenol)propane (bisphenol A) and 4,4'-dihydroxydiphenylsulfone were used, respectively, instead of 4-hydroxybenzenesulfoneanilide (an electron-accepting compound) used in the preparation of dispersion liquid B-1 in Example 1.

Comparative Example 3

The comparative heat-sensitive recording material (32) was obtained in the same manner as in Example 1

except that the amount of 4-hydroxybenzenesulfoneanilide (an electron-accepting compound) used in the preparation of dispersion liquid B-1 in Example 1 was changed from 20 parts to 4 parts.

Example 30

<Preparation of coating solution for heat-sensitive recording layer>

-Preparation of dispersion liquid A-2 (containing electron-donating colorless dye)-

The following components were mixed with a ball mill to prepare dispersion liquid A-2 having a volume mean diameter of 0.7 μm. The volume mean diameter was measured with a laser diffraction type size distribution measuring instrument (trade name: LA500, manufactured by Horiba, Inc.).

[Composition of dispersion liquid A-2]

- 2-Anilino-3-methyl-6-diethylaminofluorane 10 parts
  (an electron-donating colorless dye)
- 2.5 % Polyvinyl alcohol solution 50 parts
  (trade name: PVA-105, manufactured by Kuraray Co., Ltd.)

-Preparation of dispersion liquid B-2 (containing electron-accepting compound)-

The following components were mixed with a ball mill to prepare dispersion liquid B-2 having a volume mean diameter of 0.7 μm. The volume mean diameter was measured in the same manner as the method for measuring the volume mean diameter of dispersion liquid A-2.

(Composition of dispersion liquid B-2)

- 4-hydroxybenzenesulfoneanilide 20 parts
  (an electron-accepting compound represented by general formula (1))
- 2.5% Polyvinyl alcohol solution 100 parts
  (trade name: PVA-105, manufactured by Kuraray Co., Ltd.)

-Preparation of dispersion liquid C-2 (containing sensitizer)-

The following components were mixed with a ball mill to prepare dispersion liquid C-2 having a volume mean diameter of 0.7 μm. The volume mean diameter was measured in the same manner as the method for measuring the volume mean diameter of dispersion liquid A-2.

(Composition of dispersion liquid C-2)

- 2-Benzyloxynaphthalene (a sensitizer) 20 parts
- 2.5% Polyvinyl alcohol solution 100 parts
  (trade name: PVA-105, manufactured by Kuraray Co., Ltd.)

-Preparation of dispersion liquid D-2 (containing pigment)-

The following components were mixed with a sand mill to prepare dispersion liquid D-2 having a volume mean diameter of 1.5 μm. The volume mean diameter was measured in the same manner as the method for measuring the volume mean diameter of dispersion liquid A-2.

(Composition of dispersion liquid D-2)

- Calcite light calcium carbonate 40 parts
  (trade name: UNIVER 70, manufactured by Shiraishi Kogyo K.K.)
- Sodium polyacrylate 1 part
- Water 60 parts

-Preparation of coating solution for heat-sensitive recording layer-

The following components were mixed to prepare a coating solution for a heat-sensitive recording layer.

(Composition of coating solution for heat-sensitive recording layer)

- Dispersion liquid A-2 60 parts
- Dispersion liquid B-2 120 parts
- Dispersion liquid C-2 120 parts
- Dispersion liquid D-2 101 parts
- 30% Zinc stearate dispersion liquid 15 parts
- Paraffin wax (30%) 20 parts
- Sodium dodecylbenzenesulfonate (25%) 4 parts

<Preparation of coating solution for undercoat layer of substrate>

The following components were mixed and stirred with a dissolver to prepare a dispersion liquid.

- Calcined kaolin (oil-absorption amount: 75 ml/100 g) 100 parts
- Sodium hexametaphosphate 1 part
- Water 110 parts

Twenty parts of SBR (styrene-butadiene rubber latex) and 25 parts of oxidized starch (25%) were then applied to the obtained dispersion liquid to prepare a coating solution for an undercoat layer of a substrate.

<Preparation of heat-sensitive recording material>

Woodfree paper having smoothness measured by JIS-P8119 of 150 seconds was prepared as a substrate. The coating solution for an undercoat layer of a substrate obtained above was applied to the surface of the woodfree paper by a blade coater so that the coating amount after drying became 8 g/$m^2$ and an undercoat layer was thus formed. By applying the undercoat layer, the smoothness measured by JIS-P8119 of the substrate became 350 seconds.
The coating solution for a heat-sensitive recording layer obtained above was then applied to the undercoat layer with a curtain coater so that the coating amount after drying became 4 g/$m^2$. The resultant coating was dried and a heat-sensitive recording layer was thus obtained. The surface of the thus-formed heat-sensitive recording layer was then subjected to calendaring treatment and a heat-sensitive recording material of the invention (33) was obtained.
The color development density of the obtained heat-sensitive recording material (33) (measured by Macbeth reflection densitometer RD-918) at an energy, applied to a thermal head, of 15.2 mJ/$mm^2$, which was measured according to the same conditions and method as those in evaluations described later, was 1.28.

Example 31

-Preparation of dispersion liquid E-2-

The following components were mixed with a ball mill to prepare dispersion liquid E-2 having a volume mean diameter of 0.7 μm. The volume mean diameter was measured in the same manner as in Example 30.

(Composition of dispersion liquid E-2)

- 1,1,3-Tris(2-methyl-4-hydroxy-5-tert-butylphenyl)butane (an image stabilizer) 5 parts
- 2.5% Polyvinyl alcohol solution 25 parts
  (trade name: PVA-105, manufactured by Kuraray Co., Ltd.; an adhesive)

-Preparation of coating solution for heat-sensitive recording layer-

Dispersion liquids A-2, B-2, C-2 and D-2 were prepared in the same manner as in Example 30 and mixed with dispersion liquid E-2 obtained above in accordance with the following composition to prepare a coating solution for a heat-sensitive recording layer. Furthermore, the heat-sensitive recording material of the invention (34) was obtained in the same manner as in Example 30.

(Composition of coating solution for heat-sensitive-color develop layer)

- Dispersion liquid A-2 60 parts
- Dispersion liquid B-2 120 parts
- Dispersion liquid C-2 120 parts
- Dispersion liquid E-2 30 parts
- Dispersion liquid D-2 101 parts
- 30% Zinc stearate dispersion liquid 20 parts
- Paraffin wax (30%) 15 parts
- Sodium dodecylbenzenesulfonate (25%) 4 parts

Example 32

Dispersion liquid E-2' was prepared in the same manner as in Example 31 except that 1,1,3-tris(2-methyl-4-hydroxy-5-cyclohexylphenyl)butane was used instead of 1,1,3-tris(2-methyl-4-hydroxy-5-tert-butylphenyl)butane (an image stabilizer) used in the preparation of dispersion liquid E-2. Furthermore, the heat-sensitive recording material of the invention (35) was obtained in the same manner as in Example 31.

Examples 33 and 34

The heat-sensitive recording materials of the invention (36) and (37) were obtained in the same manner as in Example 30 except that 20 parts of amorphous silica (trade name: MIZUKASIL P832, manufactured by Mizusawa Industrial Chemicals, Ltd.) and 40 parts of aluminum hydroxide (trade name: HYGILITE H42, manufactured by Showa Denko K.K.) were used, respectively, instead of 40 parts of calcite light calcium carbonate (UNIVER 70; inorganic pigment) used in the preparation of dispersion liquid D-2.

Example 35

The heat-sensitive recording material of the invention (38) was obtained in the same manner as in Example 30 except that a 2.5% sulfo-modified polyvinyl alcohol (trade name: GOHSERAN L3266, manufactured by Nippon Synthetic Chemical Industry Co., Ltd.) aqueous solution was used instead of a 2.5% polyvinyl alcohol aqueous solution (an adhesive) used in the preparations of dispersion liquids A-2, B-2 and C-2.

Example 36

The heat-sensitive recording material of the invention (39) was obtained in the same manner as in Example 30 except that a 2.5% polyvinyl alcohol aqueous solution (an adhesive) used in the preparations of dispersion liquids A-2, B-2 and C-2 was changed to a 2.5% diacetone-modified polyvinyl alcohol (trade name: D500, manufactured by Unitika Ltd.) aqueous solution to prepare dispersion liquids A-2', B-2' and C-2', and that 13 parts of a 5% adipic acid dihydrazide aqueous solution (a crosslinking agent) was added to the coating solution for a heat-sensitive recording layer obtained by mixing the thus-obtained dispersion liquids A-2', B-2' and C-2'.

Example 37

The heat-sensitive recording material of the invention (40) was obtained in the same manner as in Example 30 except that a 2.5% polyvinyl alcohol aqueous solution (an adhesive) used in the preparations of dispersion liquids A-2, B-2 and C-2 was changed to a 2.5% acetoacetyl-modified polyvinyl alcohol (trade name: GOHSEFIMER Z210, manufactured by Nippon Synthetic Chemical Industry Co., Ltd.) aqueous solution to prepare dispersion liquids A-2", B-2" and C-2", and that 13 parts of a 5% glyoxal aqueous solution (a crosslinking agent) was added to the coating solution for a heat-sensitive recording layer obtained by mixing the thus-obtained dispersion liquids A-2", B-2" and C-2".

Example 38

The heat-sensitive recording material of the invention (41) was obtained in the same manner as in Example 30 except that recycled paper (50 g/$m^2$) made of recycled pulp (70%) and LBKP (30%) and having smoothness measured by JIS-P8119 of 170 seconds was used instead of woodfree paper used as the substrate in Example 30.

Example 39

The heat-sensitive recording material of the invention (42) was obtained in the same manner as in Example 30 except that, after formation of an undercoat layer on a substrate, the coating solution for a heat-sensitive recording layer obtained in Example 30 and the following coating solution for a protective layer were applied simultaneously with a curtain coater and the resultant coatings were dried to form multiple layers and the surface of the laminated protective layer was subjected to calendaring treatment instead of applying the coating solution for a heat-sensitive recording layer, drying and calendaring the resultant coating after formation of an undercoat layer on a substrate in the <Preparation of heat-sensitive recording material> of Example 30. The dried coating amount of the protective layer was 2.0 g/$m^2$.

-Preparation of coating solution for protective layer-

The following components were stirred with a sand mill to prepare a pigment dispersion having a volume mean diameter of 2 μm. The volume mean diameter was measured in the same manner as in Example 30.

- Aluminum hydroxide (average particle size: 1 μm) 40 parts
  (trade name: HYGILITE H42, manufactured by Showa Denko K.K.)
- Sodium polyacrylate 1 part
- Water 60 parts

A mixture of 200 parts of a 15% urea phosphate esterified starch aqueous solution (trade name: MS4600, manufactured by Nihon Shokuhin Kako Co., Ltd.), 200 parts of a 15% polyvinyl alcohol aqueous solution (trade name: PVA-105, manufactured by Kuraray Co., Ltd.) and 60 parts of water was separately prepared. The pigment dispersion obtained above, and 25 parts of a zinc stearate emulsified dispersion having a volume mean diameter of 0.15 μm (trade name: HYDRIN F115, manufactured by Chukyo Yushi Co., Ltd.) and 125 parts of a 2% 2-ethylhexyl sodium sulfosuccinate aqueous solution were added to the mixture to form a coating solution for a protective layer.

Examples 40 to 42

The heat-sensitive recording materials of the invention (43) to (45) were obtained in the same manner as in Example 39 except that 40 parts of aluminum hydroxide (trade name: HYGILITE H43; volume mean diameter: 0.7 μm; manufactured by Showa Denko K.K.), 40 parts of kaolin (trade name: KAOBRITE; volume mean diameter: 2.5 μm; manufactured by Shiraishi Kogyo K.K.) and 20 parts of amorphous silica (trade name: MIZUKASIL P707; volume mean diameter: 2.2 μm; manufactured by Mizusawa Industrial Chemicals, Ltd.) were used, respectively, instead of 40 parts of aluminum hydroxide (HYGILITE H42; an inorganic pigment) used in the preparation of the coating solution for a protective layer in Example 39.

Examples 43 to 49

The heat-sensitive recording materials of the invention (46) to (52) were obtained in the same manner as in Example 30 except that dimethylbenzyl oxalate (trade name: HS3520R-N, manufactured by Dainippon Ink and Chemicals, Inc.), m-terphenyl, ethylene glycol tolyl ether, p-benzylbiphenyl, 1,2-diphenoxymethylbenzene, diphenylsulfone

and 1,2-diphenoxyethane were used, respectively, instead of 2-benzyloxynaphthalene (a sensitizer) used in the preparation of dispersion liquid C-2 in Example 30.

Examples 50 to 54

The heat-sensitive recording materials of the invention (53) to (57) were obtained in the same manner as in Example 30 except that 2-anilino-3-methyl-6-dibutylaminofluorane, 2-anilino-3-methyl-6-(N-ethyl-N-isoamylamino) fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorine were used, respectively, instead of 2-anilino-3-methyl-6-diethylaminofluorane (an electron-donating colorless dye) used in the preparation of dispersion liquid A-2 in Example 30.

Example 55

The heat-sensitive recording material of the invention (58) was obtained in the same manner as in Example 30 except that an air knife coater was used instead of the curtain coater used in the application of the coating solution for a heat-sensitive recording layer in Example 30.

Examples 56 to 59

The heat-sensitive recording materials of the invention (59) to (62) were obtained in the same manner as in Example 30 except that N-benzyl-4-hydroxybenzenesulfoneamide (= p-N-benzylsulfamoylphenol), BTUM, 4-hydroxy-4'-isopropoxydiphenylsulfone and 2,4-bis(phenylsulfonyl)phenol were used, respectively, instead of 4-hydroxybenzenesulfoneanilide (an electron-accepting compound) used in the preparation of dispersion liquid B-2 in Example 30.

Comparative Examples 4 and 5

The comparative heat-sensitive recording materials (63) and (64) were obtained in the same manner as in Example 30 except that 2,2'-bis(4-hydroxyphenol)propane (bisphenol A) and 4,4'-dihydroxydiphenylsulfone were used, respectively, instead of 4-hydroxybenzenesulfoneanilide (an electron-accepting compound) used in the preparation of dispersion liquid B-2 in Example 30.

Comparative Example 6

The comparative heat-sensitive recording material (65) was obtained in the same manner as in Example 30 except that the amount of 4-hydroxybenzenesulfoneanilide (an electron-accepting compound) used in the preparation of dispersion liquid B-2 in Example 30 was changed from 20 parts to 4 parts.

Comparative Example 7

The comparative heat-sensitive recording material (66) was obtained in the same manner as in Example 30 except that the volume mean diameter of dispersion liquid B-2 was adjusted to 1.3 μm.

Comparative Example 8

The comparative heat-sensitive recording material (67) was obtained in the same manner as in Example 30 except that benzyl p-oxybenzoate was used instead of 4-hydroxybenzenesulfoneanilide (an electron-accepting compound) used in the preparation of dispersion liquid B-2 in Example 30.

Example 60

The heat-sensitive recording material of the invention was prepared according to the following procedure using the following components and coating method, and the like. In the preparation, the color development density at an energy, applied to a thermal head, of 15.2 mJ/mm$^2$ was adjusted to a value of not less than 1.20.

<Preparation of coating solution for heat-sensitive recording layer>

-Preparation of dispersion liquid A-3 (containing electron-donating colorless dye)-

The following components were mixed with a ball mill to prepare dispersion liquid A-3 having a volume mean diameter of 0.7 µm. The volume mean diameter was measured with a laser diffraction type size distribution measuring instrument (trade name: LA500, manufactured by Horiba, Inc.).

[Composition of dispersion liquid A-3]

- 2-Anilino-3-methyl-6-diethylaminofluorane 10 parts
  (an electron-donating colorless dye)
- 2.5% Polyvinyl alcohol solution 50 parts
  (trade name: PVA-105, manufactured by Kuraray Co., Ltd.; an adhesive)

-Preparation of dispersion liquid B-3 (containing electron-accepting compound)-

The following components were mixed with a ball mill to prepare dispersion liquid B-3 having a volume mean diameter of 0.7 µm. The volume mean diameter was measured in the same manner as the method for measuring the volume mean diameter of dispersion liquid A-3.

[Composition of dispersion liquid B-3]

- 4-Hydroxybenzenesulfoneanilide 20 parts
  (an electron-accepting compound represented by general formula (1))
- 2.5% Polyvinyl alcohol solution 100 parts
  (trade name: PVA-105, manufactured by Kuraray Co., Ltd.; an adhesive)

-Preparation of dispersion liquid C-3 (containing sensitizer)-

The following components were mixed with a ball mill to prepare dispersion liquid C-3 having a volume mean diameter of 0.7 µm. The volume mean diameter was measured in the same manner as the method for measuring the volume mean diameter of dispersion liquid A-3.

[Composition of dispersion liquid C-3]

- 2-Benzyloxynaphthalene (a sensitizer) 20 parts
- 2.5% Polyvinyl alcohol solution 100 parts
  (trade name: PVA-105, manufactured by Kuraray Co., Ltd.; an adhesive)

-Preparation of dispersion liquid D-3 (including pigment)-

The following components were mixed with a sand mill to prepare dispersion liquid D-3 having a volume mean diameter of 2.0 µm. The volume mean diameter was measured in the same manner as the method for measuring the volume mean diameter of dispersion liquid A-3.

[Composition of dispersion liquid D-3]

- Calcite light calcium carbonate 40 parts
  (trade name: UNIVER 70, manufactured by Shiraishi Kogyo K.K.)

- Sodium polyacrylate 1 part
- Water 60 parts

-Preparation of coating solution for heat-sensitive recording layer-

The following components were mixed to prepare a coating solution for a heat-sensitive recording layer.

[Composition of coating solution for heat-sensitive recording layer]

- Dispersion liquid A-3 60 parts
- Dispersion liquid B-3 120 parts
- Dispersion liquid C-3 120 parts
- Dispersion liquid D-3 101 parts
- 30% Zinc stearate dispersion liquid 15 parts
- Paraffin wax (30%) 15 parts
- Sodium dodecylbenzenesulfonate (25%) 4 parts

<Preparation of coating solution for undercoat layer of support>

The following components were mixed and stirred with a dissolver to prepare a dispersion liquid.

- Calcined kaolin (oil-absorption amount: 75 ml/100 g) 100 parts
- Sodium hexametaphosphate 1 part
- Water 110 parts

Twenty parts of SBR (styrene-butadiene rubber latex) and 25 parts of oxidized starch (25%) were then added to the obtained dispersion liquid to prepare a coating solution for an undercoat layer of a substrate.

<Preparation of a heat-sensitive recording material>

Woodfree paper having smoothness measured by JIS-P8119 of 150 seconds was prepared as a substrate. The coating solution for an undercoat layer of a substrate obtained above was applied to the surface of the woodfree paper by a blade coater so that the coating amount after drying became 8 g/m$^2$. Thus, an undercoat layer was formed. By applying the undercoat layer, the smoothness measured by JIS-P8119 of the substrate became 350 seconds.
The coating solution for a heat-sensitive recording layer obtained above was then applied to the undercoat layer with a curtain coater so that the coating amount after drying became 4 g/m$^2$. The resultant coating was dried and a heat-sensitive recording layer was thus obtained. The surface of the thus-formed heat-sensitive recording layer was then subjected to calendaring treatment and a heat-sensitive recording material of the invention (68) was obtained.
The color development density of the obtained heat-sensitive recording material (68) (measured by Macbeth reflection densitometer RD-918) at an energy, applied to a thermal head, of 15.2 mJ/mm$^2$, which was measured according to the same conditions and method as those in evaluations described later, was 1.28.

Example 61

-Preparation of dispersion liquid E-3-

The following components were mixed with a ball mill to prepare dispersion liquid E-3 having a volume mean diameter of 0.7 μm. The volume mean diameter was measured in the same manner as in Example 60.

[Composition of dispersion liquid E-3]

- 1,1,3-Tris(2-methyl-4-hydroxy-5-tert-butylphenyl)butane
  (an image stabilizer) 5 parts
- 2.5% Polyvinyl alcohol solution 25 parts

(trade name: PVA-105, manufactured by Kuraray Co., Ltd.; an adhesive)

-Preparation of coating solution for heat-sensitive recording layer-

Dispersion liquids A-3, B-3, C-3 and D-3 were prepared in the same manner as in Example 60 and mixed with dispersion liquid E-3 obtained above in accordance with the following composition to prepare a coating solution for a heat-sensitive recording layer. Furthermore, the heat-sensitive recording material of the invention (69) was obtained in the same manner as in Example 60.

[Composition of coating solution for heat-sensitive-color develop layer]

- Dispersion liquid A-3 60 parts
- Dispersion liquid B-3 120 parts
- Dispersion liquid C-3 120 parts
- Dispersion liquid E-3 30 parts
- Dispersion liquid D-3 101 parts
- 30% Zinc stearate dispersion liquid 15 parts
- Paraffin wax (30%) 15 parts
- Sodium dodecylbenzenesulfonate (25%) 4 parts

Example 62

Dispersion liquid E-3' was prepared in the same manner as in Example 61 except that 1,1,3-tris(2-methyl-4-hydroxy-5-cyclohexylphenyl)butane was used instead of 1,1,3-tris(2-methyl-4-hydroxy-5-tert-butylphenyl)butane (an image stabilizer) used in the preparation of dispersion liquid E-3. Furthermore, the heat-sensitive recording material of the invention (70) was obtained in the same manner as in Example 61.

Examples 63 and 64

The heat-sensitive recording materials of the invention (71) and (72) were obtained in the same manner as in Example 60 except that 20 parts of amorphous silica (trade name: MIZUKASIL P832, manufactured by Mizusawa Industrial Chemicals, Ltd.) and 40 parts of aluminum hydroxide (trade name: HYGILITE H42, manufactured by Showa Denko K.K.) were used, respectively, instead of 40 parts of calcite light calcium carbonate (UNIVER 70; inorganic pigment) used in the preparation of dispersion liquid D-3.

Example 65

The heat-sensitive recording material of the invention (73) was obtained in the same manner as in Example 60 except that a 2.5% sulfo-modified polyvinyl alcohol (trade name: GOHSERAN L3266, manufactured by Nippon Synthetic Chemical Industry Co., Ltd.) aqueous solution was used instead of a 2.5% polyvinyl alcohol aqueous solution (an adhesive) used in the preparations of dispersion liquids A-3, B-3 and C-3.

Example 66

The heat-sensitive recording material of the invention (74) was obtained in the same manner as in Example 60 except that a 2.5% polyvinyl alcohol aqueous solution (an adhesive) used in the preparations of dispersion liquids A-3, B-3 and C-3 was changed to a 2.5% diacetone-modified polyvinyl alcohol (trade name: D500, manufactured by Unitika Ltd.) aqueous solution to prepare dispersion liquids A-3', B-3' and C-3', and that 13 parts of a 5% adipic acid dihydrazide aqueous solution (a crosslinking agent) was added to the coating solution for a heat-sensitive recording layer obtained by mixing the thus-obtained dispersion liquids A-3', B-3' and C-3'.

Example 67

The heat-sensitive recording material of the invention (75) was obtained in the same manner as in Example 60 except that a 2.5% polyvinyl alcohol aqueous solution (an adhesive) used in the preparations of dispersion liquids A-3, B-3 and C-3 was changed to a 2.5% acetoacetyl-modified polyvinyl alcohol (trade name: GOHSEFIMER Z210,

manufactured by Nippon Synthetic Chemical Industry Co., Ltd.) aqueous solution to prepare dispersion liquids A-3", B-3" and C-3", and that 13 parts of a 5% glyoxal aqueous solution (a crosslinking agent) was added to the coating solution for a heat-sensitive recording layer obtained by mixing the thus-obtained dispersion liquids A-3", B-3" and C-3".

Example 68

The heat-sensitive recording material of the invention (76) was obtained in the same manner as in Example 60 except that recycled paper (50 g/m$^2$) made of recycled pulp (70%) and LBKP (30%) and having smoothness measured by JIS-P8119 of 170 seconds was used instead of woodfree paper used as the substrate in Example 60.

Example 69

The heat-sensitive recording material of the invention (77) was obtained in the same manner as in Example 60 except that, after formation of an undercoat layer on a substrate, the coating solution for a heat-sensitive recording layer obtained in Example 60 and the following coating solution for a protective layer were applied simultaneously with a curtain coater and the resultant coatings were dried to form multiple layers and the surface of the laminated protective layer was subjected to calendaring treatment instead of applying the coating solution for a heat-sensitive recording layer, drying and calendaring the resultant coating after formation of an undercoat layer on a substrate in the <Preparation of heat-sensitive recording material> of Example 60. The dried coating amount of the protective layer was 2.0 g/m$^2$.

-Preparation of coating solution for protective layer-

The following components were stirred with a sand mill to prepare a pigment dispersion having a volume mean diameter of 2 μm. The volume mean diameter was measured in the same manner as in Example 60.

- Aluminum hydroxide (average particle size: 1 μm) 40 parts
  (trade name: HYGILITE H42, manufactured by Showa Denko K.K.)
- Sodium polyacrylate 1 part
- Water 60 parts

A mixture of 200 parts of a 15% urea phosphate esterified starch aqueous solution (trade name: MS4600, manufactured by Nihon Shokuhin Kako Co., Ltd.), 200 parts of a 15% polyvinyl alcohol aqueous solution (trade name: PVA-105, manufactured by Kuraray Co., Ltd.) and 60 parts of water was separately prepared. The pigment dispersion obtained above, and 25 parts of a zinc stearate emulsified dispersion having a volume mean diameter of 0.15 μm (trade name: HYDRIN F115, manufactured by Chukyo Yushi Co., Ltd.) and 125 parts of a 2% 2-ethylhexyl sodium sulfosuccinate aqueous solution were added to the mixture to form a coating solution for a protective layer.

Examples 70 to 72

The heat-sensitive recording materials of the invention (78) to (80) were obtained in the same manner as in Example 69 except that 40 parts of aluminum hydroxide (trade name: HYGILITE H43; volume mean diameter: 0.7 μm; manufactured by Showa Denko K.K.), 40 parts of kaolin (trade name: KAOBRITE; volume mean diameter: 2.5 μm; manufactured by Shiraishi Kogyo K.K.) and 20 parts of amorphous silica (trade name: MIZUKASIL P707; volume mean diameter: 2.2 μm; manufactured by Mizusawa Industrial Chemicals, Ltd.) were used, respectively, instead of 40 parts of aluminum hydroxide (HYGILITE H42; an inorganic pigment) used in the preparation of the coating solution for a protective layer in Example 69.

Examples 73 to 79

The heat-sensitive recording materials of the invention (81) to (87) were obtained in the same manner as in Example 60 except that dimethylbenzyl oxalate (trade name: HS3520R-N, manufactured by Dainippon Ink and Chemicals, Inc.), m-terphenyl, ethylene glycol tolyl ether, p-benzylbiphenyl, 1,2-diphenoxymethylbenzene, diphenylsulfone and 1,2-diphenoxyethane were used, respectively, instead of 2-benzyloxynaphthalene (a sensitizer) used in the preparation of dispersion liquid C-3.

Examples 80 to 84

The heat-sensitive recording materials of the invention (88) to (92) were obtained in the same manner as in Example 60 except that 2-anilino-3-methyl-6-dibutylaminofluorane, 2-anilino-3-methyl-6-(N-ethyl-N-isoamylamino) fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorine were used, respectively, instead of 2-anilino-3-methyl-6-diethylaminofluorane (an electron-donating colorless dye) used in the preparation of dispersion liquid A-3 in Example 60.

Example 85

The heat-sensitive recording material of the invention (93) was obtained in the same manner as in Example 60 except that an air knife coater was used instead of the curtain coater used in the application of the coating solution for a heat-sensitive recording layer in Example 60.

Examples 86 to 89

The heat-sensitive recording materials of the invention (94) to (97) were obtained in the same manner as in Example 60 except that N-benzyl-4-hydroxybenzenesulfoneamide (= p-N-benzylsulfamoylphenol), BTUM, 4-hydroxy-4'-isopropoxydiphenylsulfone and 2,4-bis(phenylsulfonyl)phenol were used, respectively, instead of 4-hydroxybenzenesulfoneanilide (an electron-accepting compound) used in the preparation of dispersion liquid B-3 in Example 60.

Comparative Example 9

The comparative heat-sensitive recording material (98) was obtained in the same manner as in Example 60 except that 4,4'-dihydroxydiphenylsulfone was used instead of 4-hydroxybenzenesulfoneanilide (an electron-accepting compound) used in the preparation of dispersion liquid B-3 in Example 60.

Comparative Example 10

The comparative heat-sensitive recording material (99) was obtained in the same manner as in Example 60 except that the amount of a 30% zinc stearate dispersion liquid used in the preparation of the coating solution for a heat-sensitive recording layer in Example 60 was changed from 15 parts to 45 parts.

Example 90

The heat-sensitive recording material of the invention was prepared according to the following procedure using the following components and coating method, and the like. In the preparation, the color development density at an energy, applied to a thermal head, of 15.2 mJ/mm$^2$ was adjusted to a value of not less than 1.20.

<Preparation of coating solution for heat-sensitive recording layer>

-Preparation of dispersion liquid A-4 (containing electron-donating colorless dye)-

The following components were mixed with a ball mill to prepare dispersion liquid A-4 having a volume mean diameter of 0.7 μm. The volume mean diameter was measured with a laser diffraction type size distribution measuring instrument (trade name: trade name: LA500, manufactured by Horiba, Inc.).

[Composition of dispersion liquid A-4]

- 2-Anilino-3-methyl-6-diethylaminofluorane 10 parts
  (an electron-donating colorless dye)
- 2.5% Polyvinyl alcohol solution 50 parts
  (trade name: PVA-105, manufactured by Kuraray Co., Ltd.; an adhesive)

-Preparation of dispersion liquid B-4 (containing electron-accepting compound)-

The following components were mixed with a ball mill to prepare dispersion liquid B-4 having a volume mean diameter of 0.7 µm. The volume mean diameter was measured in the same manner as the method for measuring the volume mean diameter of dispersion liquid A-4.

[Composition of dispersion liquid B-4]

- 4-Hydroxybenzenesulfoneanilide 20 parts
  (an electron-accepting compound represented by general formula (1))
- 2.5% Polyvinyl alcohol solution 100 parts
  (trade name: PVA-105, manufactured by Kuraray Co., Ltd.; an adhesive)

-Preparation of dispersion liquid C-4 (containing sensitizer)-

The following components were mixed with a ball mill to prepare dispersion liquid C-4 having a volume mean diameter of 0.7 µm. The volume mean diameter was measured in the same manner as the method for measuring the volume mean diameter of dispersion liquid A-4.

[Composition of dispersion liquid C-4]

- 2-Benzyloxynaphthalene (a sensitizer) 20 parts
- 2.5% Polyvinyl alcohol solution 100 parts
  (trade name: PVA-105, manufactured by Kuraray Co., Ltd.; an adhesive)

-Preparation of dispersion liquid D-4 (including pigment) -

The following components were mixed with a sand mill to prepare dispersion liquid D-4 having a volume mean diameter of 2.0 µm. The volume mean diameter was measured in the same manner as the method for measuring the volume mean diameter of dispersion liquid A-4.

[Composition of dispersion liquid D-4]

- Calcite light calcium carbonate 40 parts
  (trade name: UNIVER 70, manufactured by Shiraishi Kogyo K.K.)
- Sodium hexametaphosphate (40% aqueous solution) 1 part
- Water 60 parts

-Preparation of coating solution for heat-sensitive recording layer-

The following components were mixed to prepare a coating solution for a heat-sensitive recording layer.

(Composition of coating solution for heat-sensitive recording layer)

- Dispersion liquid A-4 60 parts
- Dispersion liquid B-4 120 parts
- Dispersion liquid C-4 120 parts
- Dispersion liquid D-4 101 parts
- 30% Zinc stearate dispersion liquid 15 parts
- Paraffin wax (30%) 15 parts

- Sodium dodecylbenzenesulfonate (25%) 3 parts

<Preparation of coating solution for undercoat layer of substrate>

The following components were mixed and stirred with a dissolver to prepare a dispersion liquid.

- Calcined kaoline (oil-absorption amount: 75 ml/100 g) 100 parts
- Sodium hexametaphosphate 1 part
- Water 110 parts

Twenty parts of SBR (styrene-butadiene rubber latex) and 25 parts of oxidized starch (25%) were then added to the obtained dispersion liquid to prepare a coating solution for an undercoat layer of a substrate.

<Preparation of a heat-sensitive recording material>

Woodfree paper having smoothness measured by JIS-P8119 of 150 seconds was prepared as a substrate. The coating solution for an undercoat layer of a substrate obtained above was applied to the surface of the woodfree paper by a blade coater so that the coating amount after drying became 8 g/m$^2$. Thus, an undercoat layer was formed. By applying the undercoat layer, the smoothness measured by JIS-P8119 of the substrate became 350 seconds.

The coating solution for a heat-sensitive recording layer obtained above was then applied to the undercoat layer with a curtain coater so that the coating amount after drying became 4 g/m$^2$. The resultant coating was dried and a heat-sensitive recording layer was thus obtained. The surface of the thus-formed heat-sensitive recording layer was then subjected to calendaring treatment and a heat-sensitive recording material of the invention (100) was obtained.

The color development density of the obtained heat-sensitive recording material (100) (measured by Macbeth reflection densitometer RD-918) at an energy, applied to a thermal head, of 15.2 mJ/mm$^2$, which was measured according to the same conditions and method as those in evaluations described later, was 1.28.

Example 91

- Preparation of dispersion liquid E-4 -

The following components were mixed with a ball mill to prepare dispersion liquid E-4 having a volume mean diameter of 0.7 μm. The volume mean diameter was measured in the same manner as in Example 90.

(Composition of dispersion liquid E-4)

- 1,1,3-Tris(2-methyl-4-hydroxy-5-tert-butylphenyl)butane
  (an image stabilizer) 5 parts
- 2.5% Polyvinyl alcohol solution 25 parts
  (trade name: PVA-105, manufactured by Kuraray Co., Ltd.; an adhesive)

-Preparation of coating solution for heat-sensitive recording layer-

Dispersion liquids A-4, B-4, C-4 and D-4 were prepared in the same manner as in Example 90 and mixed with dispersion liquid E-4 obtained above in accordance with the following composition to prepare a coating solution for a heat-sensitive recording layer. Furthermore, the heat-sensitive recording material of the invention (101) was obtained in the same manner as in Example 90.

(Composition of coating solution for heat-sensitive-color develop layer)

- Dispersion liquid A-4 60 parts
- Dispersion liquid B-4 120 parts
- Dispersion liquid C-4 120 parts
- Dispersion liquid E-4 30 parts

- Dispersion liquid D-4 101 parts
- 30% Zinc stearate dispersion liquid 15 parts
- Paraffin wax (30%) 15 parts
- Sodium dodecylbenzenesulfonate (25%) 3 parts

Example 92

Dispersion liquid E-4' was prepared in the same manner as in Example 91 except that 1,1,3-tris(2-methyl-4-hydroxy-5-cyclohexylphenyl)butane was used instead of 1,1,3-tris(2-methyl-4-hydroxy-5-tert-butylphenyl)butane (an image stabilizer) used in the preparation of dispersion liquid E-4. Furthermore, the heat-sensitive recording material of the invention (102) was obtained in the same manner as in Example 91.

Examples 93 and 94

The heat-sensitive recording materials of the invention (103) and (104) were obtained in the same manner as in Example 90 except that 20 parts of amorphous silica (trade name: MIZUKASIL P832, manufactured by Mizusawa Industrial Chemicals, Ltd.) and 40 parts of aluminum hydroxide (trade name: HYGILITE H42, manufactured by Showa Denko K.K.) were used, respectively, instead of 40 parts of calcite light calcium carbonate (UNIVER 70; inorganic pigment) used in the preparation of dispersion liquid D-4.

Example 95

The heat-sensitive recording material of the invention (105) was obtained in the same manner as in Example 90 except that a 2.5% sulfo-modified polyvinyl alcohol (trade name: GOHSERAN L3266, manufactured by Nippon Synthetic Chemical Industry Co., Ltd.) aqueous solution was used instead of a 2.5% polyvinyl alcohol aqueous solution (an adhesive) used in the preparations of dispersion liquids A-4, B-4 and C-4.

Example 96

The heat-sensitive recording material of the invention (106) was obtained in the same manner as in Example 90 except that a 2.5% polyvinyl alcohol aqueous solution (an adhesive) used in the preparations of dispersion liquids A-4, B-4 and C-4 was changed to a 2.5% diacetone-modified polyvinyl alcohol (trade name: D500, manufactured by Unitika Ltd.) aqueous solution to prepare dispersion liquids A-4', B-4' and C-4', and that 13 parts of a 5% adipic acid dihydrazide aqueous solution (a crosslinking agent) was added to the coating solution for a heat-sensitive recording layer obtained by mixing the thus-obtained dispersion liquids A-4', B-4' and C-4'.

Example 97

The heat-sensitive recording material of the invention (107) was obtained in the same manner as in Example 90 except that a 2.5% polyvinyl alcohol aqueous solution (an adhesive) used in the preparations of dispersion liquids A-4, B-4 and C-4 was changed to a 2.5% acetoacetyl-modified polyvinyl alcohol (trade name: GOHSEFIMER Z210, manufactured by Nippon Synthetic Chemical Industry Co., Ltd.) aqueous solution to prepare dispersion liquids A-4", B-4" and C-4", and that 13 parts of a 5% glyoxal aqueous solution (a crosslinking agent) was added to the coating solution for a heat-sensitive recording layer obtained by mixing the thus-obtained dispersion liquids A-4", B-4" and C-4".

Example 98

The heat-sensitive recording material of the invention (108) was obtained in the same manner as in Example 90 except that recycled paper (50 g/$m^2$) made of recycled pulp (70%) and LBKP (30%) and having smoothness measured by JIS-P8119 of 170 seconds was used instead of woodfree paper used as the substrate in Example 90.

Example 99

The heat-sensitive recording material of the invention (109) was obtained in the same manner as in Example 90 except that, after formation of an undercoat layer on a substrate, the coating solution for a heat-sensitive recording layer obtained in Example 90 and the following coating solution for a protective layer were applied simultaneously with a curtain coater and the resultant coatings were dried to form multiple layers and the surface of the laminated protective layer was subjected to calendaring treatment instead of applying the coating solution for a heat-sensitive recording

layer, drying and calendaring the resultant coating after formation of an undercoat layer on a substrate in the <Preparation of heat-sensitive recording material> of Example 90. The dried coating amount of the protective layer was 2.0 g/$m^2$.

-Preparation of coating solution for protective layer-

The following components were stirred with a sand mill to prepare a pigment dispersion having a volume mean diameter of 2 µm. The volume mean diameter was measured in the same manner as in Example 90.

- Aluminum hydroxide (average particle size 1: µm) 40 parts (trade name: HYGILITE H42, manufactured by Showa Denko K.K.)
- Sodium polyacrylate 1 part
- Water 60 parts

A mixture of 200 parts of a 15% urea phosphate esterified starch aqueous solution (trade name: MS4600, manufactured by Nihon Shokuhin Kako Co., Ltd.), 200 parts of a 15% polyvinyl alcohol aqueous solution (trade name: PVA-105, manufactured by Kuraray Co., Ltd.) and 60 parts of water was separately prepared. The pigment dispersion obtained above, and 25 parts of a zinc stearate emulsified dispersion having a volume mean diameter of 0.15 µm (trade name: HYDRIN F115, manufactured by Chukyo Yushi Co., Ltd.) and 125 parts of a 2% 2-ethylhexyl sodium sulfosuccinate aqueous solution were added to the mixture to form a coating solution for a protective layer.

Examples 100 to 102

The heat-sensitive recording materials of the invention (110) to (112) were obtained in the same manner as in Example 99 except that 40 parts of aluminum hydroxide (trade name: HYGILITE H43; volume mean diameter: 0.7 µm; manufactured by Showa Denko K.K.), 40 parts of kaolin (trade name: KAOBRITE; volume mean diameter: 2.5 µm; manufactured by Shiraishi Kogyo K.K.) and 20 parts of amorphous silica (trade name: MIZUKASIL P707; volume mean diameter: 2.2 µm; manufactured by Mizusawa Industrial Chemicals, Ltd.) were used, respectively, instead of 40 parts of aluminum hydroxide (HYGILITE H42; an inorganic pigment) used in the preparation of the coating solution for a protective layer in Example 99.

Examples 103 to 109

The heat-sensitive recording materials of the invention (113) to (119) were obtained in the same manner as in Example 90 except that dimethylbenzyl oxalate (trade name: HS3520R-N, manufactured by Dainippon Ink and Chemicals, Inc.), m-terphenyl, ethylene glycol tolyl ether, p-benzylbiphenyl, 1,2-diphenoxymethylbenzene, diphenylsulfone and 1,2-diphenoxyethane were used, respectively, instead of 2-benzyloxynaphthalene (a sensitizer) used in the preparation of dispersion liquid C-4.

Examples 110 to 114

The heat-sensitive recording materials of the invention (120) to (124) were obtained in the same manner as in Example 90 except that 2-anilino-3-methyl-6-dibutylaminofluorane, 2-anilino-3-methyl-6-(N-ethyl-N-isoamylamino) fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorine were used, respectively, instead of 2-anilino-3-methyl-6-diethylaminofluorane (an electron-donating colorless dye) used in the preparation of dispersion liquid A-4 in Example 90.

Example 115

The heat-sensitive recording material of the invention (125) was obtained in the same manner as in Example 60 except that an air knife coater was used instead of the curtain coater used in the application of the coating solution for a heat-sensitive recording layer in Example 90.

Examples 116 to 119

The heat-sensitive recording materials of the invention (126) to (129) were obtained in the same manner as in Example 90 except that N-benzyl-4-hydroxybenzenesulfoneamide (= p-N-benzylsulfamoylphenol), BTUM, 4-hydroxy-4'-isopropoxydiphenylsulfone and 2,4-bis(phenylsulfonyl)phenol were used, respectively, instead of 4-hydroxybenzenesulfoneanilide (an electron-accepting compound) used in the preparation of dispersion liquid B-4 in Example 90.

Comparative Examples 11 and 12

The comparative heat-sensitive recording materials (130) and (131) were obtained in the same manner as in Example 90 except that 2,2'-bis(4-hydroxyphenol)propane (bisphenol A) and 4,4'-dihydroxydiphenylsulfone were used, respectively, instead of 4-hydroxybenzenesulfoneanilide (an electron-accepting compound) used in the preparation of dispersion liquid B-4 in Example 90.

Comparative Example 13

The comparative heat-sensitive recording material (132) was obtained in the same manner as in Example 90 except that 2-benzyloxynaphthalene (a sensitizer) used in the preparation of dispersion liquid C-4 in Example 90 was changed to stearic acid amide.

Evaluation

The sensitivity, the background fogging, the image storability, the light fastness, the chemical resistance, printing troubles caused by friction between a head and a recording material, ink jet applicability, the contact angle and the ion concentration of the heat-sensitive recording materials of the invention (1) to (29) and comparative heat-sensitive recording materials (30) to (32) obtained above were measured and evaluated. The results are shown in Table 1. The sensitivity, the whiteness degree, the background fogging, the image storability, the image moisture resistance, the chemical resistance, printing troubles caused by friction between a head and a recording material, ink jet applicability, the contact angle and the ion concentration of the heat-sensitive recording materials of the invention (33) to (62) and comparative heat-sensitive recording materials (63) to (67) obtained above were measured and evaluated. The results are shown in Table 2. The sensitivity, the heat resistance, the background fogging, the static color developing property, the chemical resistance, printing troubles caused by friction between a head and a recording material, ink jet applicability, the contact angle and the ion concentration of the heat-sensitive recording materials of the invention (68) to (97) and comparative heat-sensitive recording materials (98) and (99) obtained above were measured and evaluated. The results are shown in Table 3. The sensitivity, the image storability, the moisture resistance, the background fogging, the chemical resistance, printing troubles caused by friction between a head and a recording material, ink jet applicability, the contact angle and the ion concentration of the heat-sensitive recording materials of the invention (100) to (129) and comparative heat-sensitive recording materials (130) to (132) obtained above were measured and evaluated. The results are shown in Table 4.

Methods for measuring and evaluating the above-mentioned items are as follows.

(1) Measurement of sensitivity

Printing was carried out with a heat-sensitive printing apparatus including a thermal head which has a partially glazed structure (trade name: KF2003-GD31A, manufactured by Rohm Co., Ltd.). The printing was carried out under conditions of a head voltage of 24V and a printing cycle of 0.98 ms/line (printing velocity: 12.8 cm/seconds) and a pulse width of 0.375 ms (applied energy: 15.2 mJ/mm$^2$), and printing densities were measured with Macbeth reflection densitometer (trade name: RD-918, manufactured by Macbeth Corporation).

(2) Evaluation of background fogging

Each of the heat-sensitive recording materials (1) to (99) was left under environmental conditions of a temperature of 60°C and a relative humidity of 20% for 24 hours, and each of the heat-sensitive recording materials (100) to (132) was left under environmental conditions of a temperature of 40°C and a relative humidity of 80% for 24 hours. Thereafter, the density of the background portion (non-image portion) of each material was measured with Macbeth reflection densitometer (trade name: RD-918, manufactured by Macbeth Corporation). The lower the value is, the better the background fogging is.

(3) Evaluation of image storability

Printing was conducted on each of the heat-sensitive recording materials with the same apparatus as the apparatus used in "(1) Measurement of sensitibity" under the same conditions as those in "(1) Measurement of sensitivity". The image density of each material immediately after the printing, and the image density of the material after the printed image had been left under the atmosphere of a temperature of 60°C and a relative humidity of 20% for 24 hours were measured with Macbeth reflection densitometer (trade name: RD-918, manufactured by Macbeth Corporation). Then, the ratio (%; density retention rate) of the image density after the leaving to the image density immediately after the printing was calculated based on the following equation. The ratio was used as an index for evaluating image storability. The higher the value is, the better the image storability is.

$$\text{Density retention rate} = [(\text{Image density after leaving})/(\text{Image density immediately after printing})] \times 100$$

(4) Evaluation of light fastness

Printing was conducted on each of the heat-sensitive recording materials with the same apparatus as the apparatus used in "(1) Measurement of sensitibity" under the same conditions as those in "(1) Measurement of sensitivity". The image density immediately after the printing and the density after the printed portion of each material had been exposed to light from a fluorescent lamp at 500,000 Lux·h (measured with a digital illuminometor T-1 (manufactured by Minolta Inc.)) were measured with Macbeth reflection densitometer (trade name: RD-918, manufactured by Macbeth Corporation). Thereafter the ratio (%; density retention rate) of the image density after the light exposure to that immediately after the printing was calculated based on the following equation, and was used as an index for evaluating light fastness. The higher the value is, the better the light fastness is.

$$\text{Density retention rate} = [(\text{Image density after light exposure})/(\text{Image density immediately after printing})] \times 100$$

(5) Evaluation of chemical resistance

Printing was conducted on each of the heat-sensitive recording materials with the same apparatus as the apparatus used in "(1) Measurement of sensitibity" under the same conditions as those in "(1) Measurement of sensitivity". Writing was conducted on the surface of the background portion and the printed portion of each printed material with a fluorescent pen (trade name: Zebra fluorescent pen 2-pink, manufactured by Zebra Co., Ltd.). Thereafter, each material was left for one day. The degree of background fogging of the background portion and the image density of the image portion of each heat-sensitive recording material were visually observed and evaluated according to the following criteria.

[Criteria]

○: The background fogging density of the background portion did not increase, and the density of the image portion did not change.
Δ: The background fogging density of the background portion slightly increased, and the density of the image portion slightly faded out.
×: The background fogging density of the background portion significantly increased, and the image portion almost faded out.

(6) Evaluation of printing troubles caused by friction between a head and a recording material

Each of the heat-sensitive recording materials was cut into 1000 sheets having A4 size. A test chart having a printing rate of 20% was printed on 1,000 sheets of each material with a word processor (trade name: RUPO 95JV, manufactured by Toshiba Corporation). The number of missing dots was used as an index for evaluation of printing troubles caused by friction between a head and a recording material.

(7) Evaluation of ink jet applicability

[1] Ink resistance

Printing was conducted on each of the heat-sensitive recording materials in the same manner as in "(1) Measurement of sensitivity". The image density ($D^1$) immediately after the printing was measured with Macbeth reflection densitometer (trade name: RD918, manufactured by Macbeth Corporation). The surface of the printed heat-sensitive recording layer (printing portions on which printing had been conducted) was brought into contact with a high quality image that was formed with an ink jet printer (trade name: EPSON MJ930C, manufactured by Epson Inc.), and these were left under at 25°C for 48 hours in this state. The image density ($D^2$) of the heat-sensitive recording layer after the leaving was measured with Macbeth reflection densitometer RD918. The density retention rate (%; $D^2/D^1 \times 100$) was calculated from the obtained densities of each heat-sensitive recording material, and was used as an index for evaluating inke jet ink resistance. The higher the value is, the better the ink resistance is.

[2] Ink jet recording applicability

Letters were printed on each of the heat-sensitive recording materials with a word processor (trade name: RUPO JW-95JU, manufactured by Toshiba Corporation). Pinting was further conducted on the thus-printed heat-sensitive recording layer with an ink jet printer, and bleeding of the ink in ink jet-recorded portions and fading of letter portions printed by the word processor were visually evaluated according to the following criteria.

(Criteria)

○: Bleeding of ink and fading of letter portions slightly occured but the letters could be read without any problem.
Δ: A part of letter portions faded, but it was possible to read the letters.
×: Letter portions completely disappeared, and the letters could not be read.

(8) Measurement of contact angle

Distilled water was dripped on the surface of the heat-sensitive recording layer of each heat-sensitive recording material (a recording surface), and the contact angle when 0.1 seconds had lapsed since the dripping was measured with FIBRO system (trade name: DAT1100, manufactured by FIBRO system, ab). The greater the value is, the more useful the material is, in view of its effects.

(9) Measurement of concentration of ions ($Na^+$ and $K^+$)

$Na^+$ and $K^+$ ions of each heat-sensitive recording material were extracted with hot water, and the masses of $Na^+$ and $K^+$ ions contained in the extract were measured by ion quantitative analysis using an atomic absorption method. The ion concentrations in Tables 1-4 represent the total ion concentration of $Na^+$ and $K^+$ ions of each material, and shows the total ppm value relative to the total mass of the heat-sensitive recording material.

(10) Evaluation of whiteness degree

The whiteness degree of the background portion of the surface of each heat-sensitive recording material was measured according to JIS P8123 (1961).

(11) Moisture resistance of image

Printing was conducted on each heat-sensitive recording material with the same apparatus as the apparatus used in "(1) Measurement of sensitibity" under the same conditions as those in "(1) Measurement of sensitivity". The image density immediately after the printing (image density A) and the image density after each of the printed heat-sensitive recording materials had been left at a temperature of 40°C and a relative humidity of 90% for 24 hours (image density B) were measured with Macbeth reflection densitometer (trade name: RD-918, manufactured by Macbeth Corporation). Thereafter the rate in decrease (%) of the image density after the leaving to the image density immediately after the printing was calculated based on the following equation, and was used as an index for evaluating moisture resistance. The lower the value is, the better the moisture resistance is.

$$\text{Rate of decrease in density} = [(\text{Image density A} - \text{Image density B})/(\text{Image density A})] \times 100$$

(12) Evaluation of heat resistance

Printing was conducted on each heat-sensitive recording with the same apparatus as the apparatus used in "(1) Measurement of sensitibity" under the same conditions as those in "(1) Measurement of sensitivity". The image density immediately after the printing (image density A) and the image density after each of the printed heat-sensitive recording materials had been left at a temperature of 70°C and a relative humidity of 30% for 24 hours (image density B) were measured with Macbeth reflection densitometer (trade name: RD-918, manufactured by Macbeth Corporation). Thereafter the rate of decrease (%) of the image density after the leaving to the image density immediately after the printing was calculated based on the following equation, and was used as an index for evaluating heat resistance. The lower the value is, the better the heat resistance is.

$$\text{Image heat resistance (Rate of decrease in density)}=\{[(\text{Image density A immediately after printing})/(\text{Image density B after leaving})]/(\text{Image density A immediately after printing})\} \times 100$$

(13) Evaluation of static color developing property

The density of the background portion (a non-image portion) of each heat-sensitive recording material after the material had been brought into contact with a heat source at 70°C for 5 seconds was measured with Macbeth reflection densitometer (trade name: RD-918, manufactured by Macbeth Corporation). The lower the value is, the better the static color developing property is.

Table 1

| | Heat-sensitive recording material | Image density (sensitivity) | Image storability | Light fastness | Background fogging density of background portion | Chemical resistance | Printing troubles | Ink jet applicability | | Contact angle [°] | Ion concentration [ppm] |
|---|---|---|---|---|---|---|---|---|---|---|---|
| | | | | | | | | Ink resistance | Ink jet recording applicability | | |
| Example 1 | (1) | 1.28 | 95% | 90% | 0.09 | ○ | 0 | 90% | ○ | 51 | 780 |
| Example 2 | (2) | 1.27 | 98% | 95% | 0.10 | ○ | 0 | 93% | ○ | 55 | 800 |
| Example 3 | (3) | 1.26 | 97% | 95% | 0.10 | ○ | 0 | 92% | ○ | 53 | 800 |
| Example 4 | (4) | 1.26 | 93% | 89% | 0.10 | ○ | 0 | 88% | ○ | 50 | 770 |
| Example 5 | (5) | 1.27 | 96% | 90% | 0.09 | ○ | 0 | 91% | ○ | 55 | 790 |
| Example 6 | (6) | 1.30 | 96% | 90% | 0.08 | ○ | 0 | 93% | ○ | 50 | 800 |
| Example 7 | (7) | 1.29 | 97% | 90% | 0.08 | ○ | 0 | 92% | ○ | 52 | 800 |
| Example 8 | (8) | 1.28 | 95% | 88% | 0.08 | ○ | 0 | 93% | ○ | 55 | 790 |
| Example 9 | (9) | 1.28 | 94% | 93% | 0.09 | ○ | 0 | 93% | ○ | 60 | 800 |
| Example 10 | (10) | 1.23 | 98% | 95% | 0.09 | ○ | 0 | 98% | ○ | 45 | 800 |
| Example 11 | (11) | 1.22 | 97% | 95% | 0.09 | ○ | 0 | 97% | ○ | 42 | 800 |
| Example 12 | (12) | 1.21 | 98% | 96% | 0.10 | ○ | 0 | 98% | ○ | 48 | 790 |
| Example 13 | (13) | 1.20 | 96% | 95% | 0.10 | ○ | 0 | 92% | ○ | 35 | 800 |
| Example 14 | (14) | 1.27 | 94% | 90% | 0.09 | ○ | 0 | 89% | ○ | 50 | 790 |
| Example 15 | (15) | 1.26 | 95% | 90% | 0.10 | ○ | 0 | 91% | ○ | 51 | 800 |
| Example 16 | (16) | 1.28 | 94% | 89% | 0.09 | ○ | 0 | 92% | ○ | 51 | 790 |
| Example 17 | (17) | 1.24 | 91% | 88% | 0.10 | ○ | 0 | 89% | ○ | 50 | 800 |
| Example 18 | (18) | 1.26 | 95% | 90% | 0.10 | ○ | 0 | 91% | ○ | 52 | 790 |
| Example 19 | (19) | 1.28 | 93% | 90% | 0.09 | ○ | 0 | 89% | ○ | 51 | 800 |

Table 1 (continued)

| | Heat-sensitive recording material | Image density (sensitivity) | Image storability | Light fastness | Background fogging density of background portion | Chemical resistance | Printing troubles | Ink jet applicability | | Contact angle [°] | Ion concentration [ppm] |
|---|---|---|---|---|---|---|---|---|---|---|---|
| | | | | | | | | Ink resistance | Ink jet recording applicability | | |
| Example 20 | (20) | 1.25 | 92% | 87% | 0.10 | ○ | 0 | 91% | ○ | 50 | 790 |
| Example 21 | (21) | 1.28 | 97% | 92% | 0.10 | ○ | 0 | 93% | ○ | 55 | 790 |
| Example 22 | (22) | 1.26 | 95% | 90% | 0.10 | ○ | 0 | 88% | ○ | 55 | 780 |
| Example 23 | (23) | 1.26 | 92% | 88% | 0.10 | ○ | 0 | 87% | ○ | 55 | 790 |
| Example 24 | (24) | 1.28 | 95% | 85% | 0.10 | ○ | 0 | 91% | ○ | 51 | 790 |
| Example 25 | (25) | 1.24 | 88% | 97% | 0.08 | ○ | 0 | 85% | ○ | 50 | 780 |
| Example 26 | (26) | 1.26 | 93% | 90% | 0.10 | ○ | 0 | 90% | ○ | 52 | 780 |
| Example 27 | (27) | 1.20 | 65% | 91% | 0.09 | Δ | 0 | 80% | Δ | 55 | 760 |
| Example 28 | (28) | 1.22 | 98% | 95% | 0.12 | ○ | 0 | 92% | ○ | 50 | 800 |
| Example 29 | (29) | 1.26 | 91% | 85% | 0.07 | ○ | 0 | 93% | ○ | 52 | 780 |
| Comparative Example 1 | (30) | 1.30 | 70% | 85% | 0.08 | × | 0 | 60% | × | 45 | 790 |
| Comparative Example 2 | (31) | 1.15 | 65% | 70% | 0.08 | × | 0 | 65% | × | 42 | 780 |
| Comparative Example 3 | (32) | 1.05 | 50% | 75% | 0.09 | Δ | 0 | 55% | Δ | 45 | 760 |

As is apparent from the results in Table 1, in the heat-sensitive recording materials of the invention (1) to (29), a high color development density (high sensitivity) could be obtained (having good image forming applicability) without deterioration of background whiteness of a background portion. Furthermore, light fastness and image storability after printing were good. Moreover, they had ink jet applicability due to improvement in a contact angle, and superior chemical resistance. They less abraded a head and therefore had a superior thermal head matching property. Therefore, light fastness, high high sensitivity, background whiteness, image storability, ink jet applicability, chemical resistance and a thermal head matching property (abrasion resistance) could be simultaneously satisfied.

In addition, in comparison with the heat-sensitive recording material (1), the heat-sensitive recording materials (2) and (3) each including an image stabilizer could have more improved image storability and ink resistance, and the heat-sensitive recording material (6) using a preferable adhesive (protective colloid) could have more improved sensitivity and more decreased background fogging. Since they included an image stabilizer, they were specifically superior in stamping applicability and handling property. The heat-sensitive recording materials (10) to (13) each including a protective layer which contained a specific inorganic pigment preferable in the invention could have more improved image storability and ink resistance (chemical resistance). Inclusion of sensitizers used in Examples 14-20 could provide good performance, as in the heat-sensitive recording material (1) of Example 1. By including the electron-donating colorless dyes used in Examples 21-25, a good color developing property and image storability could be obtained while the background fogging was kept at low level. As shown in Examples 1 and 26, a curtain coating method was more useful in view of high sensitivity. In addition, even when the substrate included recycled pulp (Example 9), the performance was not adversely affected by such inclusion.

On the other hand, in the comparative heat-sensitive recording materials (30) to (31), which did not include a compound represented by general formula (1) as an electron-accepting compound, high sensitivity could not be achieved, and light fastness, image storability, chemical resistance and ink jet applicability were inferior to those of the invention. Therefore, the characteristics which heat-sensitive recording materials should have could not be simultaneously satisfied.

Table 2

| | Heat-sensitive recording material | Electron-accepting compound particle size | Image density (sensitivity) | Image storability | Image moisture resistance | Back-ground whiteness degree | Background fogging density of background portion | Chemical resistance | Printing troubles | Ink jet applicability | | Contact angle [°] | Ion concentration [ppm] |
|---|---|---|---|---|---|---|---|---|---|---|---|---|---|
| | | | | | | | | | | Ink resistance | Ink jet recording applicability | | |
| Example 30 | (33) | 0.7 µm | 1.28 | 95% | 2% | 82 | 0.09 | ○ | 0 | 90% | ○ | 51 | 780 |
| Example 31 | (34) | 0.7 µm | 1.27 | 98% | 0% | 82 | 0.10 | ○ | 0 | 93% | ○ | 55 | 800 |
| Example 32 | (35) | 0.7 µm | 1.26 | 97% | 1% | 82 | 0.10 | ○ | 0 | 92% | ○ | 53 | 800 |
| Example 33 | (36) | 0.7 µm | 1.26 | 93% | 4% | 82 | 0.10 | ○ | 0 | 88% | ○ | 50 | 770 |
| Example 34 | (37) | 0.7 µm | 1.27 | 96% | 2% | 82 | 0.09 | ○ | 0 | 91% | ○ | 55 | 790 |
| Example 35 | (38) | 0.7 µm | 1.30 | 96% | 2% | 82 | 0.08 | ○ | 0 | 93% | ○ | 50 | 800 |
| Example 36 | (39) | 0.7 µm | 1.29 | 97% | 1% | 82 | 0.08 | ○ | 0 | 92% | ○ | 52 | 800 |
| Example 37 | (40) | 0.7 µm | 1.28 | 95% | 3% | 82 | 0.08 | ○ | 0 | 93% | ○ | 55 | 790 |
| Example 38 | (41) | 0.7 µm | 1.28 | 94% | 4% | 78 | 0.09 | ○ | 0 | 93% | ○ | 60 | 800 |
| Example 39 | (42) | 0.7 µm | 1.23 | 98% | 0% | 84 | 0.09 | ○ | 0 | 98% | ○ | 45 | 800 |
| Example 40 | (43) | 0.7 µm | 1.22 | 97% | 1% | 84 | 0.09 | ○ | 0 | 97% | ○ | 42 | 800 |
| Example 41 | (44) | 0.7 µm | 1.21 | 98% | 0% | 85 | 0.10 | ○ | 0 | 98% | ○ | 48 | 790 |
| Example 42 | (45) | 0.7 µm | 1.20 | 96% | 2% | 84 | 0.10 | ○ | 0 | 92% | ○ | 35 | 800 |
| Example 43 | (46) | 0.7 µm | 1.27 | 94% | 4% | 82 | 0.09 | ○ | 0 | 89% | ○ | 50 | 790 |
| Example 44 | (47) | 0.7 µm | 1.26 | 95% | 3% | 82 | 0.10 | ○ | 0 | 91% | ○ | 51 | 800 |
| Example 45 | (48) | 0.7 µm | 1.28 | 94% | 4% | 82 | 0.09 | ○ | 0 | 92% | ○ | 51 | 790 |
| Example 46 | (49) | 0.7 µm | 1.24 | 91% | 6% | 82 | 0.10 | ○ | 0 | 89% | ○ | 50 | 800 |
| Example 47 | (50) | 0.7 µm | 1.26 | 95% | 3% | 82 | 0.10 | ○ | 0 | 91% | ○ | 52 | 790 |
| Example 48 | (51) | 0.7 µm | 1.28 | 93% | 5% | 82 | 0.09 | ○ | 0 | 89% | ○ | 51 | 800 |
| Example 49 | (52) | 0.7 µm | 1.25 | 92% | 2% | 81 | 0.10 | ○ | 0 | 91% | ○ | 50 | 790 |
| Example 50 | (53) | 0.7 µm | 1.28 | 97% | 1% | 83 | 0.10 | ○ | 0 | 93% | ○ | 55 | 790 |
| Example 51 | (54) | 0.7 µm | 1.26 | 95% | 3% | 82 | 0.10 | ○ | 0 | 88% | ○ | 55 | 780 |
| Example 52 | (55) | 0.7 µm | 1.26 | 92% | 1% | 82 | 0.10 | ○ | 0 | 87% | ○ | 55 | 790 |
| Example 53 | (56) | 0.7 µm | 1.28 | 95% | 8% | 82 | 0.10 | ○ | 0 | 91% | ○ | 51 | 790 |
| Example 54 | (57) | 0.7 µm | 1.24 | 88% | 5% | 84 | 0.08 | ○ | 0 | 85% | ○ | 50 | 780 |
| Example 55 | (58) | 0.7 µm | 1.26 | 93% | 5% | 82 | 0.10 | ○ | 0 | 90% | ○ | 52 | 780 |
| Example 56 | (59) | 0.7 µm | 1.20 | 65% | 32% | 82 | 0.09 | Δ | 0 | 80% | Δ | 55 | 760 |
| Example 57 | (60) | 0.7 µm | 1.22 | 98% | 2% | 81 | 0.12 | ○ | 0 | 92% | ○ | 50 | 800 |
| Example 58 | (61) | 0.7 µm | 1.26 | 91% | 4% | 84 | 0.07 | ○ | 0 | 93% | ○ | 52 | 780 |
| Example 59 | (62) | 0.7 µm | 1.26 | 98% | 2% | 78 | 0.11 | ○ | 0 | 96% | ○ | 51 | 790 |
| Comparative Example 4 | (63) | 0.7 µm | 1.30 | 70% | 22% | 84 | 0.08 | × | 0 | 60% | × | 45 | 790 |
| Comparative Example 5 | (64) | 0.7 µm | 1.15 | 65% | 30% | 84 | 0.08 | × | 0 | 65% | × | 42 | 780 |
| Comparative Example 6 | (65) | 0.7 µm | 1.05 | 50% | 55% | 82 | 0.09 | Δ | 0 | 55% | Δ | 45 | 760 |
| Comparative Example 7 | (66) | 1.3 µm | 1.10 | 95% | 10% | 86 | 0.09 | ○ | 0 | 92% | ○ | 51 | 780 |
| Comparative Example 8 | (67) | 0.7 µm | 1.27 | 75% | 65% | 72 | 0.06 | ○ | 0 | 50% | ○ | 50 | 780 |

From the results in Table 2, in the heat-sensitive recording materials of the invention (33) to (62), background whiteness of a background portion was specifically excellent, and image moisture resistance after printing was also excellent. Furthermore, a high color development density (high sensitivity) could be obtained, and image storability after printing was good. Moreover, they had ink jet applicability due to improvement in a contact angle, superior chemical resistance. They less abraded a head, and were superior in a thermal head matching property. Therefore, background whiteness, image moisture resistance, high sensitivity, image storability, ink jet applicability, chemical resistance and a thermal head matching property (abrasion resistance) could be simultaneously satisfied.

In addition, in comparison with the heat-sensitive recording material (33), the heat-sensitive recording material (34) and (35) each including an image stabilizer could have more improved image storability and ink resistance, and the heat-sensitive recording material (38) using a preferable adhesive (a protective colloid) could provide more improved sensitivity and more decreased background fogging. Since they included an image stabilizer, they were superior in stamping applicability and handling property. In the heat-sensitive recording materials (42) to (45) each including a protective layer which contained a specific inorganic pigment preferable for the invention, image storability and ink resistance (chemical resistance) could be further improved. Inclusion of sensitizers used in Examples 43-49 could

provide good performance, as in the heat-sensitive recording material (33) of Example 30. By including the electron-donating colorless dyes used in Examples 50-54, a good color developing property and image storability could be obtained while the background fogging was kept at low level. As shown in Examples 30 and 55, a curtain coating method was more useful in view of high sensitivity. In addition, even when the substrate included recycled pulp (Example 38), the performance was not adversely affected by such inclusion.

On the other hand, the comparative heat-sensitive recording materials (63) to (67) had inferior image moisture resistance, sensitivity, image storability, image moisture resistance, background whiteness, chemical resistance and ink jet applicability to those of the invention. Therefore, the characteristics which heat-sensitive recording materials should have could not be simultaneously satisfied.

Table 3

| | Heat-sensitive recording material | Image density (sensitivity) | Image heat resistance (%) | Background fogging density of background portion | Static color developing property | Chemical resistance | Printingt trouble | Ink jet applicability | | Conted angle [°] | Ion concentration [ppm] |
|---|---|---|---|---|---|---|---|---|---|---|---|
| | | | | | | | | Ink resistance | Ink jet recording applicability | | |
| Example 60 | (68) | 1.28 | 10 | 0.09 | 0.10 | ○ | 0 | 90% | ○ | 51 | 780 |
| Example 61 | (69) | 1.27 | 7 | 0.10 | 0.12 | ○ | 0 | 93% | ○ | 55 | 800 |
| Example 62 | (70) | 1.26 | 8 | 0.10 | 0.12 | ○ | 0 | 92% | ○ | 53 | 800 |
| Example 63 | (71) | 1.26 | 12 | 0.10 | 0.12 | ○ | 0 | 88% | ○ | 50 | 770 |
| Example 64 | (72) | 1.27 | 9 | 0.09 | 0.12 | ○ | 0 | 91% | ○ | 55 | 790 |
| Example 65 | (73) | 1.30 | 9 | 0.08 | 0.11 | ○ | 0 | 93% | ○ | 50 | 800 |
| Example 66 | (74) | 1.29 | 8 | 0.08 | 0.11 | ○ | 0 | 92% | ○ | 52 | 800 |
| Example 67 | (75) | 1.28 | 10 | 0.08 | 0.11 | ○ | 0 | 93% | ○ | 55 | 790 |
| Example 68 | (76) | 1.28 | 11 | 0.09 | 0.12 | ○ | 0 | 93% | ○ | 60 | 800 |
| Example 69 | (77) | 1.23 | 7 | 0.09 | 0.12 | ○ | 0 | 98% | ○ | 45 | 800 |
| Example 70 | (78) | 1.22 | 8 | 0.09 | 0.12 | ○ | 0 | 97% | ○ | 42 | 800 |
| Example 71 | (79) | 1.21 | 7 | 0.10 | 0.12 | ○ | 0 | 98% | ○ | 48 | 790 |
| Example 72 | (80) | 1.20 | 9 | 0.10 | 0.12 | ○ | 0 | 92% | ○ | 35 | 800 |
| Example 73 | (81) | 1.27 | 11 | 0.09 | 0.12 | ○ | 0 | 89% | ○ | 50 | 790 |
| Example 74 | (82) | 1.26 | 11 | 0.10 | 0.12 | ○ | 0 | 91% | ○ | 51 | 800 |
| Example 75 | (83) | 1.28 | 14 | 0.09 | 0.11 | ○ | 0 | 92% | ○ | 51 | 790 |
| Example 76 | (84) | 1.24 | 16 | 0.10 | 0.11 | ○ | 0 | 89% | ○ | 50 | 800 |
| Example 77 | (85) | 1.26 | 12 | 0.10 | 0.11 | ○ | 0 | 91% | ○ | 52 | 790 |
| Example 78 | (86) | 1.28 | 14 | 0.09 | 0.10 | ○ | 0 | 89% | ○ | 51 | 800 |

Table 3 (continued)

| | Heat-sensitive recording material | Image density (sensitivity) | Image heat resistance (%) | Background fogging density of background portion | Static color developing property | Chemical resistance | Printingt trouble | Ink jet applicability | | Conted angle [°] | Ion concentration [ppm] |
|---|---|---|---|---|---|---|---|---|---|---|---|
| | | | | | | | | Ink resistance | Ink jet recording applicability | | |
| Example 79 | (87) | 1.25 | 13 | 0.10 | 0.12 | ○ | 0 | 91% | ○ | 50 | 790 |
| Example 80 | (88) | 1.28 | 10 | 0.10 | 0.11 | ○ | 0 | 93% | ○ | 55 | 790 |
| Example 81 | (89) | 1.26 | 10 | 0.10 | 0.11 | ○ | 0 | 88% | ○ | 55 | 780 |
| Example 82 | (90) | 1.26 | 13 | 0.10 | 0.11 | ○ | 0 | 87% | ○ | 55 | 790 |
| Example 83 | (91) | 1.28 | 10 | 0.10 | 0.12 | ○ | 0 | 91% | ○ | 51 | 790 |
| Example 84 | (92) | 1.24 | 16 | 0.08 | 0.10 | ○ | 0 | 85% | ○ | 50 | 780 |
| Example 85 | (93) | 1.26 | 12 | 0.10 | 0.11 | ○ | 0 | 90% | ○ | 52 | 780 |
| Example 86 | (94) | 1.20 | 38 | 0.09 | 0.10 | Δ | 0 | 80% | Δ | 55 | 760 |
| Example 87 | (95) | 1.22 | 7 | 0.12 | 0.14 | ○ | 0 | 92% | ○ | 50 | 800 |
| Example 88 | (96) | 1.26 | 14 | 0.07 | 0.07 | ○ | 0 | 93% | ○ | 52 | 760 |
| Example 89 | (97) | 1.26 | 5 | 0.11 | 0.12 | ○ | 0 | 96% | ○ | 51 | 790 |
| Comparative Example 9 | (98) | 1.15 | 55 | 0.08 | 0.11 | × | 0 | 65% | × | 42 | 780 |
| Comparative Example 10 | (99) | 1.22 | 20 | 0.10 | 0.17 | ○ | 0 | 88% | ○ | 55 | 820 |

As is apparent from the results in Table 3, in the heat-sensitive recording materials of the invention (68) to (94) which included an electron-donating colorless dye and in which a level of density of a formed image, which had been left under environmental conditions of a temperature of 70°C and a relative humidity of 30% for 24 hours after printing, was not more than 50% lower than that of the formed image before the leaving, a high color development density (high sensitivity) could be obtained (having good image forming applicability) while the background fogging of the background portion was kept at low level. The heat resistance after printing was also good. Furthermore, they had ink jet applicability due to improvement in a contact angle, and superior chemical resistance. They less abraded a head, and were superior in a thermal head matching property. Therefore, high sensitivity, background whiteness, heat resistance, ink jet applicability, chemical resistance and a thermal head matching property (abrasion resistance) could be simultaneously satisfied.

In addition, in comparison with the heat-sensitive recording material (68), the heat-sensitive recording materials (69) and (70) each including an image stabilizer could have more improved heat resistance and ink resistance, and the heat-sensitive recording material (73) using a preferable adhesive (a protective colloid) could have more improved sensitivity and more decreased background fogging. Since they included an image stabilizer, the stamping applicability and handling property were specifically excellent. In the heat-sensitive recording materials (77) to (80) each having a protective layer which included a specific inorganic pigment preferable for the invention, the heat resistance and ink resistance (chemical resistance) could be further improved. Inclusion of sensitizers used in Examples 73-79 could provide good performance, as in the heat-sensitive recording material (68) of Example 60. By including the electron-donating colorless dyes used in Examples 80-84, a good color developing property and heat resistance could be obtained while the background fogging was kept at low level. As shown in Examples 60 and 85, a curtain coating method was more useful in view of high sensitivity. In addition, even when the substrate included recycled pulp (Example 68), the performance was not adversely affected by such inclusion.

On the other hand, in the comparative heat-sensitive recording material (98), which did not use a compound represented by general formula (1) as an electron-accepting compound and had image heat resistance (rate of decrease in density) of not less than 50%, high sensitivity could not be achieved, and heat resistance, chemical resistance and ink jet applicability were inferior to those of the invention. Therefore, the characteristics which heat-sensitive recording materials should have could not be simultaneously satisfied.

Furthermore, the comparative heat-sensitive recording material (99), in which the amount of zinc stearate contained in the heat-sensitive recording layer was increased, had background coloring of 0.15 after brought into contact with the heat source at 70°C for 5 seconds, and was inferior in image heat resistance (rate of decrease in density) and had bad practical applicability.

Table 4

| | Heat-sensitive recording material | Image density (sensitivity) | Image storability | Image moisture resistance | Background fogging density of background portion | Chemical resistance | Printing trouble | Ink jet applicability | | Contact angle [°] | Ion concentration [ppm] |
|---|---|---|---|---|---|---|---|---|---|---|---|
| | | | | | | | | Ink resistance | Ink jet recording applicability | | |
| Example 90 | (100) | 1.28 | 95% | 2% | 0.09 | ○ | 0 | 90% | ○ | 51 | 780 |
| Example 91 | (101) | 1.27 | 98% | 0% | 0.10 | ○ | 0 | 93% | ○ | 55 | 800 |
| Example 92 | (102) | 1.26 | 97% | 1% | 0.10 | ○ | 0 | 92% | ○ | 53 | 800 |
| Example 93 | (103) | 1.26 | 93% | 4% | 0.10 | ○ | 0 | 88% | ○ | 50 | 770 |
| Example 94 | (104) | 1.27 | 96% | 2% | 0.09 | ○ | 0 | 91% | ○ | 55 | 790 |
| Example 95 | (105) | 1.30 | 96% | 2% | 0.08 | ○ | 0 | 93% | ○ | 50 | 800 |
| Example 96 | (106) | 1.29 | 97% | 1% | 0.08 | ○ | 0 | 92% | ○ | 52 | 800 |
| Example 97 | (107) | 1.28 | 95% | 3% | 0.08 | 0 | 0 | 93% | ○ | 55 | 790 |
| Example 98 | (108) | 1.28 | 94% | 4% | 0.09 | ○ | 0 | 93% | ○ | 60 | 800 |
| Example 99 | (109) | 1.23 | 98% | 0% | 0.09 | ○ | 0 | 98% | ○ | 45 | 800 |
| Example 100 | (110) | 1.22 | 97% | 1% | 0.09 | ○ | 0 | 97% | ○ | 42 | 800 |
| Example 101 | (111) | 1.21 | 98% | 0% | 0.10 | ○ | 0 | 98% | ○ | 48 | 790 |
| Example 102 | (112) | 1.20 | 96% | 2% | 0.10 | ○ | 0 | 92% | ○ | 35 | 800 |
| Example 103 | (113) | 1.27 | 94% | 4% | 0.09 | ○ | 0 | 89% | ○ | 50 | 790 |
| Example 104 | (114) | 1.26 | 95% | 3% | 0.10 | ○ | 0 | 91% | ○ | 51 | 800 |
| Example 105 | (115) | 1.28 | 94% | 4% | 0.09 | ○ | 0 | 92% | ○ | 51 | 790 |
| Example 106 | (116) | 1.24 | 91% | 6% | 0.10 | ○ | 0 | 89% | ○ | 50 | 800 |
| Example 107 | (117) | 1.26 | 95% | 3% | 0.10 | ○ | 0 | 91% | ○ | 52 | 790 |
| Example 108 | (118) | 1.28 | 93% | 5% | 0.09 | ○ | 0 | 89% | ○ | 51 | 800 |

Table 4 (continued)

| | Heat-sensitive recording material | Image density (sensitivity) | Image storability | Image moisture resistance | Background fogging density of background portion | Chemical resistance | Printing trouble | Ink jet applicability | | Contact angle [°] | Ion concentration [ppm] |
|---|---|---|---|---|---|---|---|---|---|---|---|
| | | | | | | | | Ink resistance | Ink jet recording applicability | | |
| Example 109 | (119) | 1.25 | 92% | 2% | 0.10 | ○ | 0 | 91% | ○ | 50 | 790 |
| Example 110 | (120) | 1.28 | 97% | 1% | 0.10 | ○ | 0 | 93% | ○ | 55 | 790 |
| Example 111 | (121) | 1.26 | 95% | 3% | 0.10 | ○ | 0 | 88% | ○ | 55 | 780 |
| Example 112 | (122) | 1.26 | 92% | 1% | 0.10 | ○ | 0 | 87% | ○ | 55 | 790 |
| Example 113 | (123) | 1.28 | 95% | 8% | 0.10 | ○ | 0 | 91% | ○ | 51 | 790 |
| Example 114 | (124) | 1.24 | 88% | 5% | 0.08 | ○ | 0 | 85% | ○ | 50 | 780 |
| Example 115 | (125) | 1.26 | 93% | 5% | 0.10 | ○ | 0 | 90% | ○ | 52 | 780 |
| Example 116 | (126) | 1.20 | 65% | 32% | 0.09 | Δ | 0 | 80% | Δ | 55 | 760 |
| Example 117 | (127) | 1.22 | 98% | 2% | 0.12 | ○ | 0 | 92% | ○ | 50 | 800 |
| Example 118 | (128) | 1.26 | 91% | 4% | 0.07 | ○ | 0 | 93% | ○ | 52 | 780 |
| Example 119 | (129) | 1.26 | 98% | 2% | 0.11 | ○ | 0 | 96% | ○ | 51 | 790 |
| Comparative Example 11 | (130) | 1.30 | 70% | 22% | 0.08 | × | 0 | 60% | × | 45 | 790 |
| Comparative Example 12 | (131) | 1.15 | 65% | 30% | 0.08 | × | 0 | 65% | × | 42 | 780 |
| Comparative Example 13 | (132) | 1.23 | 50% | 60% | 0.10 | ○ | 0 | 85% | ○ | 60 | 820 |

As is apparent from the results in Table 4, in the heat-sensitive recording materials of the invention (100) to (129), which included an electron-donating colorless dye and an electron-accepting compound represented by general formula (1) and a sensitizer according to the invention, and in which a level of density of a formed image, which had been left under environmental conditions of a temperature of 40°C and a relative humidity of 90% for 24 hours after printing, was not more than 50% lower than that of the formed image before the leaving, a high color development density (high sensitivity) could be obtained (having good image forming applicability) while the background fogging of the background portion was kept at low level. Furthermore, moisture resistance after photographic printing was also good. Moreover, they had ink jet applicability due to improvement in a contact angle, and superior chemical resistance. They less abraded a head and were superior in view of a thermal head matching property. Therefore, high sensitivity, background whiteness, moisture resistance, ink jet applicability, chemical resistance and a thermal head matching property (abrasion resistance) could be simultaneously satisfied.

In addition, in comparison with the heat-sensitive recording material (100), the heat-sensitive recording materials (101) and (102) each including an image stabilizer, could have more improved moisture resistance and ink resistance, and the heat-sensitive recording material (105) using a preferable adhesive (a protective colloid) could have more improved sensitivity and more decreased background fogging. Since they included an image stabilizer, the stamping applicability and handling property were specifically excellent. In the heat-sensitive recording materials (109) to (112) each having a protective layer which included a specific inorganic pigment preferable for the invention, moisture resistance and ink resistance (chemical resistance) could be further improved. Inclusion of sensitizers used in Examples 103-109 could provide good performance, as in the heat-sensitive recording material (100) of Example 90. By including the electron-donating colorless dyes used in Examples 110-114, a good color developing property and heat resistance could be obtained while the background fogging was kept at low level. As shown in Examples 90 and 115, a curtain coating method was more useful in view of high sensitivity. In addition, even when the substrate included recycled pulp (Example 98), the performance was not adversely affected by such inclusion.

On the other hand, in the comparative heat-sensitive recording materials (130) to (131), which did not use a compound represented by general formula (1) as an electron-accepting compound, high sensitivity could not be achieved, and moisture resistance, chemical resistance and ink jet applicability were inferior to those of the invention. The characteristics which heat-sensitive recording materials should have could be simultaneously satisfied.

Furthermore, in the comparative heat-sensitive recording material (132) in which stearic acid amide was used as a sensitizer had image moisture resistance (rate of decrease in density) of not less than 50%. Therefore, moisture resistance thereof under high humidity was inferior, and image storability was low, and practical applicability was bad.

## Claims

1. A heat-sensitive recording material comprising a substrate and a heat-sensitive recording layer provided thereon, the layer comprising an electron-donating colorless dye and an electron-accepting compound that reacts with the electron-donating colorless dye to develop color,

   wherein the electron-accepting compound is a compound represented by the following general formula (1), provided that the electron-accepting compound is not 2,4-bis(phenylsulfonyl)phenol, and the density of an image portion that has been irradiated with a fluorescent lamp at 500,000 Lux·h is retained at a rate of not less than 80% relative to that of the image portion before irradiation:

   General formula (1)

   $$R^1\text{-Ph-}SO_2R^2$$

   wherein $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a phenyl group, which is optionally substituted with a substituent comprising -$SO_2R^2$.

2. The heat-sensitive recording material of claim 1, wherein the compound represented by general formula (1) is 4-hydroxybenzenesulfonanilide.

3. The heat-sensitive recording material of claim 1, wherein the heat-sensitive recording layer comprises an image stabilizer, and the image stabilizer is at least one of 1,1,3-tris(2-methyl-4-hydroxy-5-tert-butylphenyl) butane and 1,1,3-tris(2-methyl-4-hydroxy-5-cyclohexylphenyl)butane.

**4.** The heat-sensitive recording material of claim 1, wherein the substrate comprises recycled paper pulp.

**5.** The heat-sensitive recording material of claim 1, further comprising a protecting layer provided on the heat-sensitive recording layer, the protecting layer comprising at least one kind of inorganic pigment selected from aluminum hydroxide, kaoline and amorphous silica, and a water-soluble polymer.

**6.** The heat-sensitive recording material of claim 1, wherein the heat-sensitive recording layer comprises a sensitizer, and the sensitizer is at least one kind selected from 2-benzyloxynaphthalene, dimethylbenzyl oxalate, m-terphenyl, ethylene glycol tolyl ether, p-benzylbiphenyl, 1,2-diphenoxymethylbenzene, 1,2-diphenoxyethane and diphenylsulfone.

**7.** The heat-sensitive recording material of claim 1, wherein the electron-donating colorless dye is at least one kind selected from 2-anilino-3-methyl-6-diethylaminofluorane, 2-anilino-3-methyl-6-dibutylaminofluorane, 2-anilino-3-methyl-6-(N-ethyl-N-isoamylamino)fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorane.

**8.** A heat-sensitive recording material comprising a substrate and a heat-sensitive recording layer provided thereon, the layer comprising an electron-donating colorless dye and an electron-accepting compound that reacts with the electron-donating colorless dye to develop color,

wherein the electron-accepting compound is a compound represented by the following general formula (1), and the volume mean diameter of the electron-accepting compound is not more than 1.0 μm, and the whiteness degree of a non-image portion of the heat-sensitive recording layer measured according to JIS P8123 is 75% to 90%, and a level of density of an image portion, which has been retained under environmental conditions of 40°C and relative humidity of 90% for 24 hours after printing, is not more than 50% lower than that of the image portion before retention:

General formula (1)

$$R^1\text{-Ph-}SO_2R^2$$

wherein $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a phenyl group, which is optionally substituted with a substituent comprising -$SO_2R^2$.

**9.** The heat-sensitive recording material of claim 8, wherein the heat-sensitive recording layer is formed by coating and a dry coating amount after coating is less than 6 $g/cm^2$.

**10.** The heat-sensitive recording material of claim 8, wherein the compound represented by general formula (1) is 4-hydroxybenzenesulfonanilide.

**11.** The heat-sensitive recording material of claim 8, wherein the heat-sensitive recording layer comprises an inorganic pigment and, the inorganic pigment is at least one kind selected from calcite (light) calcium carbonate, amorphous silica and aluminum hydroxide.

**12.** The heat-sensitive recording material of claim 8, wherein the heat-sensitive recording layer comprises an adhesive, and the adhesive is at least one kind selected from a sulfo-modified polyvinyl alcohol, a diacetone-modified polyvinyl alcohol and an acetoacetyl-modified polyvinyl alcohol.

**13.** The heat-sensitive recording material of claim 8, wherein the substrate comprises recycled paper pulp.

**14.** The heat-sensitive recording material of claim 8, wherein the heat-sensitive recording layer comprises a sensitizer, and the sensitizer is at least one kind selected from 2-benzyloxynaphthalene, dimethylbenzyl oxalate, m-terphenyl, ethylene glycol tolyl ether, p-benzylbiphenyl, 1,2-diphenoxymethylbenzene, 1,2-diphenoxyethane and diphenylsulfone.

**15.** The heat-sensitive recording material of claim 14, wherein the content of the sensitizer is 75 parts to 200 parts by mass relative to 100 parts by mass of the compound represented by general formula (1).

**16.** The heat-sensitive recording material of claim 8, wherein the electron-donating colorless dye is at least one kind selected from 2-anilino-3-methyl-6-diethylaminofluorane, 2-anilino-3-methyl-6-dibutylaminofluorane, 2-anilino-3-methyl-6-(N-ethyl-N-isoamylamino)fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorane.

**17.** The heat-sensitive recording material of claim 8, wherein at least one layer on the substrate is formed by a curtain coating method.

**18.** A heat-sensitive recording material comprising a substrate and a heat-sensitive recording layer provided thereon, the layer comprising an electron-donating colorless dye and an electron-accepting compound that reacts with the electron-donating colorless dye to develop color,

wherein a level of density of a formed image, which has been left under environmental conditions of a temperature of 70°C and a relative humidity of 30% for 24 hours after printing, is not more than 50% lower than that of the formed image before leaving, and an image density after a heat source has been brought into contact with the heat-sensitive recording material at 70°C for 5 seconds is not more than 0.15.

**19.** The heat-sensitive recording material of claim 18, wherein the electron-accepting compound is a compound represented by the following general formula (1):

General formula (1)

$$R^1\text{-Ph-}SO_2R^2$$

wherein $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a phenyl group, which is optionally substituted with a substituent comprising -$SO_2R^2$.

**20.** The heat-sensitive recording material of claim 18, wherein the compound represented by general formula (1) is 4-hydroxybenzenesulfonanilide.

**21.** The heat-sensitive recording material of claim 18, wherein the heat-sensitive recording layer comprises an image stabilizer, and the image stabilizer is at least one of 1,1,3-tris(2-methyl-4-hydroxy-5-tert-butylphenyl)butane and 1,1,3-tris(2-methyl-4-hydroxy-5-cyclohexylphenyl) butane.

**22.** The heat-sensitive recording material of claim 18, wherein the heat-sensitive recording layer comprises a sensitizer, and the sensitizer is at least one kind selected from 2-benzyloxynaphthalene, dimethylbenzyl oxalate, m-terphenyl, ethylene glycol tolyl ether, p-benzylbiphenyl, 1,2-diphenoxymethylbenzene, diphenylsulfone and 1,2-diphenoxyethane.

**23.** The heat-sensitive recording material of claim 18, wherein the electron-donating colorless dye is at least one kind selected from 2-anilino-3-methyl-6-diethylaminofluorane, 2-anilino-3-methyl-6-dibutylaminofluorane, 2-anilino-3-methyl-6-(N-ethyl-N-isoamylamino)fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorane.

**24.** The heat-sensitive recording material of claim 18, wherein at least one layer on the substrate is formed by a curtain coating method.

**25.** A heat-sensitive recording material comprising a substrate and a heat-sensitive recording layer provided thereon, the layer comprising an electron-donating colorless dye, an electron-accepting compound that reacts with the electron-donating colorless dye to develop color and a sensitizer,

wherein the electron-accepting compound is a compound represented by the following general formula (1), and a level of density of a formed image, which has been left under environmental conditions of a temperature of 40°C and a relative humidity of 90% for 24 hours after printing, is not more than 50% lower than that of the formed image before leaving, and the sensitizer is at least one kind selected from 2-benzyloxynaphthalene, dimethylbenzyl oxalate, m-terphenyl, ethylene glycol tolyl ether, p-benzylbiphenyl, 1,2-diphenoxymethylbenzene, diphenylsulfone and 1,2-diphenoxyethane:

General formula (1)

$$R^1\text{-Ph-}SO_2R^2$$

wherein $R^1$ represents a hydroxyl group or an alkyl group, $R^2$ represents -Ph, -NH-Ph, -Ph-$OR^3$ or -NH-CO-NH-Ph, $R^3$ represents an alkyl group, and Ph represents a phenyl group, which is optionally substituted with a substituent comprising -$SO_2R^2$.

**26.** The heat-sensitive recording material of claim 25, wherein the heat-sensitive recording layer is formed by coating and a dry coating amount after coating is less than 6 g/$cm^2$.

**27.** The heat-sensitive recording material of claim 25, wherein the compound represented by general formula (1) is 4-hydroxybenzenesulfonanilide.

**28.** The heat-sensitive recording material of claim 25, wherein the heat-sensitive recording layer comprises an image stabilizer, and the image stabilizer is at least one of 1,1,3-tris(2-methyl-4-hydroxy-5-tert-butylphenyl)butane and 1,1,3-tris(2-methyl-4-hydroxy-5-cyclohexylphenyl)butane.

**29.** The heat-sensitive recording material of claim 25, wherein, when a droplet of distilled water is dropped on a surface of the heat-sensitive recording layer, the contact angle of the droplet after 0.1 seconds has lapsed since the dropping is not less than 20°.

**30.** The heat-sensitive recording material of claim 25, wherein the electron-donating colorless dye is at least one kind selected from 2-anilino-3-methyl-6-diethylaminofluorane, 2-anilino-3-methyl-6-dibutylaminofluorane, 2-anilino-3-methyl-6-(N-ethyl-N-isoamylamino)fluorane, 2-anilino-3-methyl-6-(N-ethyl-N-propylamino)fluorane, 2-anilino-3-methyl-6-di-n-amylaminofluorane and 2-anilino-3-methyl-6-(N-ethyl-N-p-tolylamino)fluorane.

**31.** The heat-sensitive recording material of claim 25, comprising a plurality of layers on the substrate, wherin at least one of the layers is formed by a curtain coating method.

## INTERNATIONAL SEARCH REPORT

International application No. PCT/JP02/13396

**A. CLASSIFICATION OF SUBJECT MATTER**

Int.Cl⁷ B41M5/30

According to International Patent Classification (IPC) or to both national classification and IPC

**B. FIELDS SEARCHED**

Minimum documentation searched (classification system followed by classification symbols)

Int.Cl⁷ B41M5/30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 8-197848 A (New Oji Paper Co., Ltd.), 06 August, 1996 (06.08.96), Par. Nos. [0011], [0015], [0033], [0034], [0051] (Family: none) | 1,2,6,7<br>3-5,8 |
| X<br>Y | JP 10-181205 A (Hokuetsu Paper Mills, Ltd.), 07 July, 1998 (07.07.98), Par. Nos. [0012], [034] to [0036] (Family: none) | 1,2,7<br>3-6,8 |
| X<br>Y | JP 9-193550 A (Ricoh Co., Ltd.), 29 July, 1997 (29.07.97), Par. Nos. [0015] to [0019]; examples 5, 7 (Family: none) | 1,2,6,7<br>3-5,8 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>18 March, 2003 (18.03.03) | Date of mailing of the international search report<br>15 April, 2003 (15.04.03) |
| Name and mailing address of the ISA/<br>Japanese Patent Office | Authorized officer |
| Facsimile No. | Telephone No. |

Form PCT/ISA/210 (second sheet) (July 1998)

INTERNATIONAL SEARCH REPORT

International application No.
PCT/JP02/13396

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 8-310131 A (Ricoh Co., Ltd.),<br>26 November, 1996 (26.11.96),<br>Par. Nos. [0027] to [0040], [0055], [0058];<br>examples 1, 3<br>& US 5773385 A | 1,2,6,7<br>3-5,8 |
| X<br>Y | JP 9-314999 A (Nippon Paper Industries Co., Ltd.),<br>09 December, 1997 (09.12.97),<br>Par. Nos. [0013], [0028], [0045], [0059], [0064]<br>(Family: none) | 1,2,6,7<br>3-5,8 |
| Y | JP 8-253264 A (Fuji Photo Film Co., Ltd.),<br>01 October, 1996 (01.10.96),<br>Full text<br>(Family: none) | 1-8 |
| Y | JP 2000-272245 A (Fuji Photo Film Co., Ltd.),<br>03 October, 2000 (03.10.00),<br>Full text<br>(Family: none) | 1-8 |
| X<br>Y | JP 2000-247038 A (Fuji Photo Film Co., Ltd.),<br>12 September, 2000 (12.09.00),<br>Full text<br>(Family: none) | 1-14,23-28<br>15-22 |
| Y | US 4585483 A (Fuji Photo Film Co., Ltd.),<br>29 April, 1986 (29.04.86),<br>Full text<br>& JP 4-20792 B | 1-28 |
| Y | JP 04-221681 A (Ricoh Co., Ltd.),<br>12 August, 1992 (12.08.92),<br>Full text<br>(Family: none) | 4,19 |
| Y | JP 09-142018 A (Mitsubishi Paper Mills Ltd.),<br>03 June, 1997 (03.06.97),<br>Full text<br>(Family: none) | 5 |
| Y | JP 08-118808 A (Ricoh Co., Ltd.),<br>14 May, 1996 (14.05.96),<br>Full text<br>(Family: none) | 5 |
| Y | JP 02-169291 A (Ricoh Co., Ltd.),<br>29 June, 1990 (29.06.90),<br>Full text<br>(Family: none) | 5 |
| Y | JP 05-24343 A (Fuji Photo Film Co., Ltd.),<br>02 February, 1993 (02.02.93),<br>Amended Claim 2; Par. No. [0027]<br>(Family: none) | 15-22 |

Form PCT/ISA/210 (continuation of second sheet) (July 1998)

INTERNATIONAL SEARCH REPORT

International application No.
PCT/JP02/13396

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2001-63210 A (Ricoh Co., Ltd.),<br>13 March, 2001 (13.03.01),<br>Full text<br>(Family: none) | 15,16,20,21<br>17-19,22 |
| X<br>Y | JP 8-324123 A (New Oji Paper Co., Ltd.),<br>10 December, 1996 (10.12.96),<br>Par. Nos. [0004], [0014], [0015], [0017], [0023],<br>[0026], [0027], [0049], [0050]<br>(Family: none) | 15,16,20-22<br>17-19 |
| Y | EP 992363 A1 (Fuji Photo Film Co., Ltd.),<br>12 April, 2000 (12.04.00),<br>Par. Nos. [0030], [0036]<br>& JP 2000-108519 A<br>Par. Nos. [0025], [0028] | 18 |
| Y | JP 2000-345067 A (Mitsui Chemicals, Ltd.),<br>12 December, 2000 (12.12.00),<br>Par. Nos. [0083], [0105]<br>(Family: none) | 18 |
| Y | JP 4-332682 A (Honshu Seishi Kabushiki Kaisha),<br>19 November, 1992 (19.11.92),<br>Par. No. [0008]<br>(Family: none) | 18 |
| Y | JP 4-105987 A (Ricoh Co., Ltd.),<br>07 April, 1992 (07.04.92),<br>Claims<br>(Family: none) | 18 |
| P,Y | JP 2002-127604 A (Fuji Photo Film Co., Ltd.),<br>08 May, 2002 (08.05.02),<br>Full text<br>(Family: none) | 18 |
| X | EP 791578 A2 (Sanko Kaihatsu Kagaku Kenkyusho),<br>27 August, 1997 (27.08.97),<br>Full text<br>& JP 9-227502 A & US 5840652 A | 23,24,26-28 |
| P,X | WO 02/098673 A1 (Fuji Photo Film Co., Ltd.),<br>12 December, 2002 (12.12.02),<br>Full text<br>& JP 2002-362033 A & JP 2003-11520 A<br>& JP 2003-63144 A & JP 2003-63145 A<br>& JP 2003-63146 A | 1-28 |
| E,X | WO 03/002354 A1 (Fuji Photo Film Co., Ltd.),<br>09 January, 2003 (09.01.03),<br>Full text<br>& JP 2003-63138 A & JP 2003-11519 A<br>& JP 2003-11521 A & JP 2003-63143 A | 1-28 |

Form PCT/ISA/210 (continuation of second sheet) (July 1998)

## INTERNATIONAL SEARCH REPORT

International application No.
PCT/JP02/13396

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-219651 A (General Corp.),<br>14 August, 2001 (14.08.01),<br>Par. Nos. [0027], [0049]<br>(Family: none) | 9-14 |
| A | US 5847744 A (ROHM CO., LTD.),<br>08 December, 1998 (08.12.98),<br>Full text; all drawings<br>& JP 08-207335 A | 9-14 |
| Y | JP 2001-293956 A (Mitsubishi Paper Mills Ltd.),<br>23 October, 2001 (23.10.01),<br>Full text<br>(Family: none) | 8,14,22 |
| Y | JP 2001-018526 A (Mitsubishi Paper Mills Ltd.),<br>23 January, 2001 (23.01.01),<br>Full text<br>& DE 10033056 A & US 6497926 A<br>& JP 2001-113226 A & JP 2001-138631 A<br>& JP 2001-138632 A | 8,14,22 |
| Y | JP 7-314914 A (Fuji Photo Film Co., Ltd.),<br>05 December, 1995 (05.12.95),<br>Full text<br>(Family: none) | 8,14,22 |

Form PCT/ISA/210 (continuation of second sheet) (July 1998)

**INTERNATIONAL SEARCH REPORT**

International application No.
PCT/JP02/13396

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:
(see extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.1to 9:

**Remark on Protest** ☐ The additional search fees were accompanied by the applicant's protest.
☒ No protest accompanied the payment of additional search fees.

Form PCT/ISA/210 (continuation of first sheet (1)) (July 1998)

INTERNATIONAL SEARCH REPORT

International application No.
PCT/JP02/13396

Continuation of Box No.II of continuation of first sheet(1)

The application describes a group of inventions of claims 1 and 2, inventions of claims 3, 4, 5, 6 and 7, a group of inventions of claims 8 to 17, a group of inventions of claims 18 to 24, and a group of inventions of claims 25 to 31, for the following reason.

The matter common to all of the claims 1 to 31 is only "A heat-sensitive recording material having a support ----------- which reacts with the electron-donating colorless dye to effect coloring" described in claim 1, which is a description of the prior art.

Therefore, since there is no other common matter in all the claims which may be a special technical feature in the meaning of the second sentence of PCT Rule 13.2, no technical relationship in the meaning of PCT Rule 13.1 can be found between those different inventions.

Accordingly, claims 1, 8, 18 and 25 do not comply with the requirement of unity of invention.

Further, a search has revealed that the matter described in claim 1 is disclosed in documents, such as JP 2000-345067 A (Mitsui Chemical Industries, Ltd.) 2000. 12. 12, US 5721910A (Ricoh Company, Ltd.) 1998. 02. 24, and therefore, there is no special technical feature in the meaning of the second sentence of PCT Rule 13.2 also in claims 1 to 7.

Therefore, respective claims 1 to 7 do not comply with the requirement of unity of invention.

Claim 2, however, relates to the limitation to the general formula (1) described in claim 1. Accordingly, the search therefor has been performed with no additional fee.

Form PCT/ISA/210 (extra sheet) (July 1998)